# EUROPÄISCHE PATENTSCHRIFT

(11) **EP 3 704 003 B1**
(45) Veröffentlichungstag und Bekanntmachung des Hinweises auf die Patenterteilung: **06.11.2024**
(21) Anmeldenummer: 18785541.6
(22) Anmeldetag: 02.10.2018
(51) Int. Cl.: B62J 1/12, B62J 1/14, B62J 1/20

(54) **MOTORRADSITZANORDNUNG**
MOTORCYCLE SEAT ASSEMBLY
ENSEMBLE SIÈGE DE MOTO

(30) Priorität: 31.10.2017 DE 102017125524
(43) Veröffentlichungstag der Anmeldung: 09.09.2020
(73) Patentinhaber: KTM AG, 5230 Mattighofen (AT)
(72) Erfinder: GRÖBNER, Helmut, 83329 Waging am See (DE)
(74) Vertreter: Söllner, Udo
(86) Internationale Anmeldenummer: PCT/EP2018/076709
(87) Internationale Veröffentlichungsnummer: WO 2019/086184

(56) Entgegenhaltungen:
- DE-U1- 202007 009 922
- JP-A- 2003 127 930
- JP-A- 2005 125 863
- JP-A- S58 185 382
- JP-U- S5 515 171
- US-A1- 2006 180 373
- US-A1- 2010 207 416

## Beschreibung

Die vorliegende Erfindung betrifft eine Motorradsitzanordnung mit einer Tragstruktur und einem an der Tragstruktur angeordneten Sitzpolster sowie einem das Sitzpolster überspannenden Sitzpolsterbezug, wobei die Tragstruktur eine dem Sitzpolster zugewandte erste Seite und eine vom Sitzpolster abgewandte zweite Seite aufweist und die zweite Seite zumindest einen Abschnitt mit einem äußeren Randbereich aufweist und mindestens ein Abschnitt des Sitzpolsterbezugs zumindest einen Teil des Abschnitts des äußeren Randbereichs übergreift.

Bei der Motorradsitzanordnung kann es sich um einen Einzelsitz oder Sattel für den Fahrer des Motorrads handeln oder auch um eine Motorradsitzanordnung oder Sitzbank für den Fahrer und den Beifahrer oder auch um eine Motorradsitzanordnung oder Sattel oder Sitzbank nur für den Beifahrer.

Eine Motorradsitzanordnung muss in Abhängigkeit von der Art oder dem Typ des Motorrads, an dem sie Verwendung findet, unterschiedliche Aufgaben erfüllen. So muss die Sitzanordnung bei einem Motorrad, welches für lange Touren oder Langstreckenfahrten eingesetzt wird, den Benutzern des Motorrads guten Sitzkomfort bieten und andererseits auch einen stabilen Halt, um beispielsweise eine unbeabsichtigte seitliche oder longitudinale Bewegung des Benutzers zu vermeiden.

Bei einem für sportliches, ambitioniertes oder rennmäßiges Fahren vorgesehenen Motorrad muss es die Sitzanordnung ermöglichen, dass der Fahrer, der einen hangoff Stil bevorzugt, leicht seine Sitzposition auf der Sitzanordnung verändern kann, also je nach Kurvenfahrtrichtung von der oberen Sitzfläche der Sitzanordnung nach links oder nach rechts gerichtet seine Sitzposition verändern kann oder von der seitlichen Sitzposition wieder in Richtung zur oberen Sitzfläche hin.

Bekannte Motorradsitzanordnungen weisen einen Sitzpolsterbezug auf, der aus einem Kunststoffwerkstoff, beispielsweise Polyvinylchlorid, gebildet ist und das Sitzpolster in der Form eines dünnen Bezugs überspannt. Je nach Wunsch des Benutzers des Motorrads kann der Sitzpolsterbezug auch aus anderen Werkstoffen gebildet sein, wie beispielsweise einem Kunstlederwerkstoff oder Leder.

Alle genannten Werkstoffe weisen den Nachteil auf, dass der Sitzpolsterbezug zur Bildung von Falten neigt, also sich an der Sitzfläche der Motorradsitzanordnung Falten ausbilden, auf denen der oder die Benutzer des Motorrads mit dem Gesäß sitzen oder die Innenseiten der Oberschenkel der Benutzer aufliegen.

Eine solche Bildung von Falten verschlechtert den Sitzkomfort erheblich, da die Falten den vom Benutzer gefühlten Gegendruck der Motorradsitzanordnung lokal stark verändern und dies von den Benutzern als Druckstellen wahrgenommen wird. Darüber hinaus kann die Bildung von Falten die Bewegungsfreiheit eines sportlich ambitionierten Benutzers des Motorrads verringern, da der Benutzer die von der Falte ausgeübte Haltekraft bei der Veränderung der Position des Benutzers relativ zur Sitzfläche überwinden muss und auch ein solcher sportlich orientierter Benutzer die Bildung von Falten an der Seitenfläche des Motorradsitzanordnung in der Form von Druckstellen als störend empfindet.

Zusätzlich zu den geschilderten Problemen neigen bekannte Motorradsitzbezüge auch zu einem erhöhten Verschleiß und können aufgrund ihrer ganzflächig einheitlichen Struktur an der Sitzfläche nur über die gesamte Motorradsitzanordnung beziehungsweise Sitzfläche gleichbleibende Reibwerte bereitstellen.

Bei Motorrädern spielt bei Kaufentscheidungen das Design und die Fertigungsgüte eine große Rolle. Auf beide Bereiche wirkt sich das Spaltmaß zwischen der Motorradsitzanordnung und diese umgebende Verkleidungsbauteile aus und es hat sich gezeigt, dass bekannte Motorradsitzanordnungen dazu neigen, ein unterschiedliches Spaltmaß im Verlauf des Spaltes zwischen der Sitzanordnung und Verkleidungsbauteilen auszubilden, was insbesondere auch dann der Fall ist, wenn der Sitzpolsterbezug bei bekannten Motorradsitzanordnungen nach längerer Betriebszeit an Spannung verloren hat, und sich dadurch das Spaltmaß verändert.

Anhand der indischen Patentanmeldung IN2001 MU01138 A ist eine Motorradsitzanordnung bekannt geworden, die eine Tragstruktur aufweist, an deren Oberseite ein Sitzpolster angeordnet ist, welches von einem Sitzpolsterbezug überspannt wird.

Anhand der US 7,146,250 B1 ist ein zusammenfaltbarer Sitzüberzug in der Form eines Wetterschutzes oder Regenschutzes bekannt geworden, der an der Motorradsitzanordnung befestigt werden kann und eine Umrandung aufweist, an der ein elastisches Band, ein Klebestreifen oder ein Zugband angeordnet ist, mittels der der Sitzüberzug über den Sitzpolsterbezug der Motorradsitzanordnung gespannt werden kann, um dafür zu sorgen, dass die Sitzanordnung bei Regen oder der Anwendung von Wasser und Lösungsmitteln oder Reinigungsmitteln trocken bleibt.

Anhand der DE 20 2007 009 922 U1 ist ein Motorradsitz bekannt geworden, der eine Trägerstruktur aufweist, auf der ein elastisches Sitzbankpolster angeordnet ist, welches von einem Sitzbankbezug überspannt wird. Das Sitzpolster weist unterhalb des Sitzbankbezugs eine davon überdeckte Ausnehmung auf, die dafür sorgt, dass unter dem Sitzbankbezug ein Hohlraum entsteht und somit der vom Sitzpolster auf die äu-ßeren Geschlechtsteile beziehungsweise das Schambein des Benutzers ausgeübte Gegendruck verringert wird.

Anhand der Druckschrift JP S58 185382 A ist eine Motorradsitzanordnung nach dem Oberbegriff des Anspruchs 1 bekannt geworden.

Ausgehend hiervon liegt der vorliegenden Erfindung zur Beseitigung der geschilderten Nachteile die Aufgabe zugrunde, eine Motorradsitzanordnung zu schaffen, die einerseits das Problem der Faltenbildung beseitigt, eine hohe Langlebigkeit aufweist, eine exakte und reproduzierbare Positionierbarkeit zur Beseitigung des Problems sich verändernder Spaltmaße ermöglicht und eine hohe Designfreiheit schafft.

Die zur Lösung dieser Aufgabe geschaffene Erfindung weist die im Anspruch 1 angegebenen Merkmale auf. Vorteilhafte Ausgestaltungen hiervon sind in den weiteren Ansprüchen beschrieben.

Die Erfindung schafft eine Motorradsitzanordnung mit einer Tragstruktur und einem an der Tragstruktur angeordneten Sitzpolster sowie einem das Sitzpolster überspannenden Sitzpolsterbezug, wobei die Tragstruktur eine dem Sitzpolster zugewandte erste Seite und eine vom Sitzpolster abgewandte zweite Seite aufweist und die zweite Seite zumindest einen Abschnitt mit einem äußeren Randbereich aufweist und mindestens ein Abschnitt des Sitzpolsterbezugs zumindest einen Teil des Abschnitts des äußeren Randbereichs übergreift, wobei der Sitzpolsterbezug ein elastischer dreidimensionaler Formkörper ist, wobei der Formkörper derart ausgebildet ist, dass der von der Tragstruktur und/oder dem Sitzpolster getrennte Formkörper bei einer Anordnung mit einem Bereich, der einen Teil des Abschnitts des äußeren Randbereichs der Tragstruktur übergreift, auf einer ebenen Unterlage aufliegend, seine dreidimensionale Ausbildung zumindest weitgehend beibehält.

Die Erfindung schafft also eine Motorradsitzanordnung mit einer Tragstruktur und einem daran angeordneten Sitzpolster sowie einem Sitzpolsterbezug, welcher das Sitzpolster überspannt. Die Tragstruktur kann eine erste Seite aufweisen, bei der es sich um eine Oberseite handeln kann, welche beispielsweise auch im Winkel oder bereichsweise im Winkel zum Sitzpolster verlaufen kann und auch eine zweite Seite, die beispielsweise die Unterseite der Tragstruktur sein kann, mit der die Tragstruktur direkt oder über Zwischenelemente, wie beispielsweise Puffer oder Dämpferelemente an einem Rahmenbauteil des Motorrads festgelegt sein kann. Die zweite Seite kann auch beispielsweise über eine schräge Fläche in Richtung zur ersten Seite ausgerichtet sein, sodass auch beide Seiten beziehungsweise Flächen aufeinander zu verlaufend ausgerichtet sein können.

An der zweiten Seite kann ein Abschnitt vorgesehen sein, der einen äußeren Randbereich aufweist, der von einem Abschnitt des Sitzpolsterbezugs übergriffen wird und an dem der Sitzpolsterbezug lösbar oder unlösbar festgelegt sein kann. Bei dem Sitzpolsterbezug handelt es sich nicht, wie dies bei bekannten Motorradsitzanordnungen der Fall ist, um einen Bezug in der Form eines flächigen Materials eines beschichteten Gewebes, ein Kunstleder oder ein Leder oder dergleichen, welches über das Sitzpolster gespannt wird, sondern um einen elastischen dreidimensionalen Formkörper, also um einen Körper und nicht nur ein Material mit einer zweidimensionalen flächigen Erstreckung. Der Körper kann einstückig oder einteilig ausgebildet sein und weist eine dreidimensionale Eigenstruktur mit einer Wandstärke auf, die den dreidimensionalen Körper auch dann als Körper und nicht nur als ein von einem flächigen Gebilde gebildeten Überzug oder Bezug erscheinen lässt, wenn der Körper von dem Sitzpolster getrennt ist. Ein aus einem bekannten flächigen Stoff oder Gewebe oder Leder oder Lederersatzstoff oder Sitzbankbezugmaterial gebildeter Sitzbankbezug nimmt zwar eine dem Sitzpolster entsprechende Form auf, wenn er an dem Sitzpolsterbezug angeordnet ist, also darauf oder darüber gespannt ist, verliert aber diese Form, wenn er vom Sitzpolster getrennt ist, währen der nach der Erfindung vorgesehene elastische dreidimensionale Formkörper seine dreidimensionale Körperform auch denn beibehält, wenn er vom Sitzpolster getrennt ist. Der Formkörper ist also ein dreidimensionaler Körper, sei er an dem Sitzpolster angeordnet oder sei er davon getrennt.

Der Formkörper besitzt dabei eine Außenform, die als Sitzfläche für den Benutzer des Motorrads ausgebildet ist und eine Innenform, die form- und flächenkomplementär zur Form oder Kontur des Sitzpolsters ausgebildet ist und der Formkörper bildet einen Aufnahmeraum aus, in dem das Sitzpolster aufgenommen werden kann. Der Formkörper weist also eine dreidimensionale Struktur auf und besitzt diese dreidimensionale Struktur bereits, bevor er an dem Sitzpolster beziehungsweise der Tragstruktur angeordnet wird.

Auch ein von dem Sitzpolster und/oder der Tragstruktur getrennter Sitzpolsterbezug in der Form des erfindungsgemäßen Formkörpers weist eine Dreidimensionalität oder dreidimensionale Konfiguration mit einem elastischen Strukturkörper auf, sodass er sich von einem flächigen Gebilde in der Form eines PVC-, Leder- oder Kunstlederbezugs oder dergleichen unterscheidet, der erst durch die Anordnung an dem Sitzpolster eine an das Sitzpolster angepasste definierte räumliche Form einnimmt, aber vom Sitzpolster getrennt keine definierte Raumform aufweist, selbst dann nicht, wenn er für die Motorradsitzanordnung spezifisch angepasst wurde, also beispielsweise in der Form eines angepassten Sitzbezugs genäht wurde.

Der Formkörper besitzt den Vorteil einer exakten und reproduzierbaren Positionierbarkeit mit scharfen und definierten Außenformen und Kanten des Formkörpers, sodass sich bei der Anordnung an einem Motorrad mit Verkleidungsbauteilen auch ein definierter und scharfer Spaltlinienverlauf zwischen der Motorradsitzanordnung und den Verkleidungsbauteilen einstellt.

Da der Formkörper das Sitzpolster in seinem Aufnahmeraum aufnimmt und er daher am Sitzpolster und an der Tragstruktur als eine definierte Form aufweisender Körper angeordnet wird und nicht wie ein loser Bezugsstoff über das Sitzpolster gespannt und mit Spannung festgezogen werden muss, ist der Formkörper dazu in der Lage, eine reproduzierbare Ausrichtung und Anordnung der Motorradsitzanordnung relativ zu dem Motorradrahmen und etwaigen Verkleidungsbauteilen zu gewährleisten und sich daher auch der optische Gesamteindruck der Motorradsitzanordnung relativ zu den genannten Bauteilen auch bei einer langen Nutzungsdauer nicht ändert.

Ein als bekannter Bezugsstoff an dem Sitzpolster aufgespannter Sitzpolsterbezug verliert über die Nutzungsdauer an Elastizität und Spannung und verändert daher sein optisches Erscheinungsbild und damit auch den optischen Gesamteindruck der Motorradsitzanordnung über die Nutzungsdauer, woraus sich auch der Nachteil ergibt, dass sich die vorstehend genannten Spaltmaße zwischen der Motorradsitzanordnung und den Peripheriebauteilen des Motorrads über die Nutzungsdauer ändern und sich der optische Gesamteindruck daher verschlechtert.

Es ist nach einer Weiterbildung der Erfindung vorgesehen, dass der Formkörper eine dem Sitzpolster zugewandte Unterseite und eine als Sitzfläche dienende Oberseite besitzt und einen das Sitzpolster aufnehmenden Aufnahmeraum aufweist. Der Aufnahmeraum ist so ausgebildet, dass der Formkörper an dem bereits an der Tragstruktur angeordneten Sitzpolster angeordnet werden kann und das Sitzpolster daher an der Unterseite des Formkörpers anliegt, wobei es nach einer Alternative hierzu auch vorgesehen ist, dass das Sitzpolster beispielsweise bei der Herstellung des Formkörpers in den Aufnahmeraum eingeschäumt werden kann, also beispielsweise zusammen mit dem Formkörper im Rahmen eines Kunststoffverarbeitungsvorgangs ausgebildet werden kann und das Sitzpolster sowie der Formkörper mit Materialien unterschiedlicher Shorehärtegrade ausgebildet werden können.

Es ist nach einer Weiterbildung der Erfindung auch vorgesehen, dass der Formkörper in einer Schnittansicht quer zu einer Linksmittelebene des Formkörpers U-förmig ausgebildet ist und an mindestens einem Endbereich eines Schenkels davon ein sich zumindest weitgehend in Richtung der Längsmittelebene erstreckender Abschnitt vorgesehen ist, der zumindest einen Teil des Abschnitts des äußeren Randbereichs der zweiten Seite der Tragstruktur übergreift.

Die U-förmige Ausbildung des Formkörpers kann dabei so gewählt werden, dass die beiden Schenkel des U-Profils die beiden seitlichen Bereiche des Sitzpolsterbezugs ausbilden, die also als Schenkelauflage für die Innenschenkel des Benutzers dienen und der Bereich zwischen den beiden Schenkeln die Sitzfläche des Sitzpolsterbezugs ausbildet. Der innen liegende Leerraum zwischen den beiden Schenkeln des U-Profils bildet dann den Aufnahmeraum für das Sitzpolster aus.

Diese Konfiguration macht auch deutlich, dass ein Sitzpolsterbezug in der Form des nach der Erfindung vorgesehenen Formkörpers bei der Anordnung in der Form eines umgedrehten oder invertierten U-Profils im oben erwähnten Querschnitt - also mit der Öffnung des U-Profils zwischen den beiden Schenkeln nach unten ausgerichtet - auf einer ebenen Unterlage aufliegend seine dreidimensionale Ausbildung zumindest weitgehend beibehält und nicht wie ein bekannter Bezugsstoff einer bekannten Motorradsitzanordnung in sich zusammenfällt und eine nicht mehr definierte Raumform aufweist, die sich dadurch auszeichnet, dass der Formkörper bei einer wiederholten Anordnung auf der ebenen Unterlage in der beschriebenen Weise immer die gleiche Konfiguration beibehält, während der bekannte Bezugsstoff bei einer wiederholten Anordnung auf der ebenen Unterlage in der beschriebenen Weise nicht reproduzierbar immer wieder die gleiche Konfiguration einnimmt, da er hierzu eine zu geringe Stabilität oder Steifigkeit und Wandstärke aufweist, während der Formkörper die hierzu notwendige Stabilität und/oder Steifigkeit und/oder Wandstärke aufweist.

Dies liegt darin begründet, dass der Formkörper nach der Erfindung eine vorbestimmte Eigenfestigkeit beziehungsweise Eigensteifigkeit aufweist, im Gegensatz zu dem bekannten Bezugsstoff einer bekannten Motorradsitzanordnung.

Es ist nach einer Weiterbildung der Erfindung auch vorgesehen, dass der Formkörper eine Längsmittelachse aufweist und in Richtung der Längsmittelachse betrachtet eine Vorderseite und eine Rückseite aufweist und an der Vorderseite und/oder der Rückseite mindestens einen sich in Richtung zum aufzunehmenden Sitzpolster hin erstreckenden Abschnitt aufweist, der zumindest einen Teil des Abschnitts des äußeren Randbereichs der zweiten Seite der Tragstruktur übergreift.

Der Abschnitt an der Vorderseite und/oder der Rückseite des Formkörpers kann also den außen liegenden oder äußeren Randbereich der Tragstruktur übergreifen und dies auch zusammen mit dem oder den sich in Richtung zur Längsmittelebene des Formkörpers erstreckenden Abschnitt ausführen, sodass auch eine Konfiguration des Formkörpers möglich ist, der die Tragstruktur beziehungsweise den äußeren Randbereich der Tragstruktur allseits umgibt und somit der Formkörper über die Eigenspannung des elastischen Formkörpers an der Tragstruktur fixiert wird, ohne dass weitere Haltemittel oder Hilfsmittel für die Befestigung des Formkörpers an der Tragstruktur der Motorradsitzanordnung notwendig sind.

Dies ermöglicht eine rasche Fertigung der erfindungsgemäßen Motorradsitzanordnung und auch eine exakte und reproduzierbare Positionierbarkeit des als Sitzpolsterbezug dienenden Formkörpers an dem Aufbau der Motorradsitzanordnung, da der Formkörper über die Tragstruktur beziehungsweise dem oder den äußeren Randbereich an der Tragstruktur gleichsam nur darüber gestülpt werden muss und danach an der Tragstruktur ohne weitere Haltemittel festgelegt ist.

Eine solche Konfiguration besitzt auch den weiteren Vorteil, dass sich der Formkörper ohne Werkzeugeinsatz wieder von der Tragstruktur der Motorradsitzanordnung lösen lässt und beispielsweise durch einen anders konturierten und konfigurierten Formkörper ersetzt werden kann, und somit beispielsweise einem anderen Sitzverhalten verschiedener Benutzer des Motorrads, also Fahrer und/oder Beifahrer auf einfache und schnelle Art und Weise Rechnung getragen werden kann, da der Formkörper leicht und ohne Werkzeugeinsatz gegen einen anderen Formkörper ausgetauscht werden kann, der dem anderen Sitzverhalten Rechnung trägt und dies beispielsweise durch eine entsprechende Auswahl des Härtegrads der zur Bildung des Formkörpers eingesetzten Kunststoffwerkstoffs erreicht wird.

Bei einer bekannten Motorradsitzanordnung mit einem Sitzpolsterbezug aus einem flächigen PVC Material oder dergleichen, müssten hierzu die das PVC Material an der Tragstruktur haltenden Befestigungsmittel in der Form beispielsweise von Halteklammern gelöst werden und dann ein Sitzpolsterbezug aus einem anderen flächigen Material wieder mühsam mit Halteklammern festgelegt werden. Auch nach einer solchen Vorgehensweise würde die bekannte Motorradsitzanordnung aber kein anderes Sitzverhalten bieten, da sich durch den Austausch eines bekannten flächigen Materials durch ein anderes flächiges Material die Elastizitätswerte des Sitzpolsters unter dem flächigen Material nicht ändern, und sich damit das vom Benutzer empfundene Sitzverhalten nicht ändert.

Bei der erfindungsgemäßen Motorradsitzanordnung aber kann ein Formkörper mit einem elastischen Werkstoff mit anderem Shorehärtegrade an der Tragstruktur festgelegt werden, wodurch der durch die erfindungsgemäße Motorradsitzanordnung bereitgestellte Sitzkomfort auf das vom Benutzer als angenehm oder bequem empfundene Sitzverhalten eingestellt oder angepasst werden kann.

Es ist nach einer Weiterbildung der Erfindung auch vorgesehen, dass der Formkörper den äußeren Randbereich der Tragstruktur übergreift und mittels einer zwischen dem Formkörper und dem Randbereich ausgebildeten Eigenspannung an der Tragstruktur festgelegt ist. Dadurch lässt sich die bereits erwähnte werkzeuglose Montage des Formkörpers an der Tragstruktur realisieren.

Es ist nach einer Weiterbildung der Erfindung auch vorgesehen, dass der Formkörper an der anzuordnenden Tragstruktur zugewandten Randbereichen des Formkörpers Abschnitte aufweist, welche mit dem Formkörper einstückig ausgebildet sind und sich von den Randbereichen des Formkörpers aus betrachtet in Richtung nach innen gerichtet erstrecken. Diese am Formkörper vorgesehenen einstückigen Abschnitte bilden gleichsam Überlappungsbereiche oder Überdeckungsbereiche aus, welche die äußeren Randbereiche der Tragstruktur überlappen oder übergreifen oder überdecken und dafür sorgen, dass der Formkörper an der Tragstruktur angeordnet werden kann und festgelegt ist, ohne dass dazu ein Werkzeug benötigt wird. Der Formkörper wird an den äußeren Randbereichen der Tragstruktur mittels der Überlappungsbereiche oder Überdeckungsbereiche übergestülpt beziehungsweise aufgestülpt und so an der Tragstruktur fixiert.

Es ist nach einer Weiterbildung der Erfindung auch vorgesehen, dass einander zugeordnete Bereiche der Abschnitte des Formkörpers einstückig miteinander verbunden sind oder einander zugeordnete Bereiche der Abschnitte ohne einstückige körperliche Verbindung ausgebildet sind.

Mit dem Vorsehen beider Möglichkeiten wird der Tatsache Rechnung getragen, dass bei der Ausführungsform, bei der einander zugeordnete oder benachbarte Bereiche der Abschnitte des Formkörpers einstückig miteinander verbunden sind, die von dieser Ausführungsform bei der Anordnung des Formkörpers mit den Abschnitten an den äußeren Randbereichen des Tragkörpers erzielte Festigkeit oder Haltekraft eine sichere Befestigung des Formkörpers an der Tragstruktur ohne weitere Haltemittel oder Hilfsmittel ermöglicht.

Die zweite Variante ohne einstückige körperliche Verbindung benachbarter oder einander zugeordneter Abschnitte des Formkörpers führt dazu, dass sich diese Ausführungsform einfach aus einem Werkzeug, beispielsweise einem Spritzgießwerkzeug, entnehmen lässt.

Es ist nach einer Weiterbildung der Erfindung auch vorgesehen, dass ein den äußeren Randbereich der Tragstruktur übergreifender Abschnitt des Formkörpers zumindest entlang eines Bereichs seiner Längserstreckung mindestens eine Vertiefung aufweist, welche eine Tiefe aufweist, die einem Teilbetrag der Wandstärke des Abschnitts entspricht.

Diese Konfiguration besitzt den Vorteil, dass bei einer optionalen zusätzlichen Festlegung der Abschnitte des Formkörpers am äußeren Randbereich der Tragstruktur mit Hilfsmitteln oder Haltemitteln in der Form von beispielsweise Klammern die sich dadurch an den Abschnitten ausbildende Verformung nicht auf die seitlichen Randbereiche des Formkörpers übertragen wird, die als Auflagefläche für die Innenschenkel der Benutzer des Motorrads dienen. Die Vertiefung oder Längsnut wirkt daher als Mittel zum Ausgleich von Spannungen, die von den Haltemitteln oder Hilfsmitteln in den Abschnitt eingetragen werden.

Es ist nach einer Weiterbildung der Erfindung auch vorgesehen, dass der Formkörper im Bereich der als Sitzfläche dienenden Oberseite eine geringere Wandstärke besitzt als an seitlichen, dem Randbereich der Tragstruktur zugeordneten Bereichen. Diese Konfiguration führt dazu, dass die elastisch nachgiebige Sitzfläche einen hohen Sitzkomfort bietet, während die sich an die Sitzfläche anschließenden Seitenflächen eine hohe Formstabilität des Formkörpers sicherstellen und auch sicherstellen, dass sich der Spaltlinienverlauf zwischen dem Formkörper und Verkleidungsbauteilen des Motorrads auch bei längerer Benutzungsdauer nicht verändert.

Es ist nach einer Weiterbildung der Erfindung auch vorgesehen, dass der Formkörper mittels mindestens eines spritzgießbaren Werkstoffs gebildet ist, insbesondere einem thermoplastischen Urethanwerkstoff, und der Formkörper einen einheitlich gleichen Shorehärtegrad besitzt oder zumindest einen Bereich mit von diesem Shorehärtegrad abweichenden Shorehärtegrad aufweist.

Es ist also nach einer Weiterbildung der Erfindung auch vorgesehen, dass der Formkörper aus nur einem Werkstoff mit einem vorbestimmten Shorehärtegrad gebildet ist, genauso ist es aber auch vorgesehen, dass der Formkörper abschnittsweise oder bereichsweise aus zwei Werkstoffen mit unterschiedlichen Shorehärtegraden gebildet ist. Diese Konfiguration weist den Vorteil auf, dass unterschiedliche Bereiche oder Abschnitte des Formkörpers ein unterschiedliches Gegendruckverhalten aufweisen und damit der Sitzkomfort des Formkörpers sogar bereichsweise oder abschnittsweise eingestellt werden kann, Auch kann über die Materialauswahl die Textur des Formkörpers an unterschiedliches Benutzungsverhalten der Benutzer des damit ausgestatteten Motorrads angepasst werden kann. So ist es möglich, eine obere Sitzfläche mit einem Rauhigkeitswert auszugestalten, der sich von einem Rauhigkeitswert an den Seitenflächen des Formkörpers unterscheidet und beispielsweise der Rauhigkeitswert an den Seitenflächen wesentlich höher ist und so eine Haltekraft an den Seitenflächen erreicht wird, die für einen sportlich orientierten Fahrer oder Benutzer von Vorteil ist.

Es ist nach einer Weiterbildung der Erfindung auch vorgesehen, dass der Formkörper mittels mindestens eines spritzgießbaren Werkstoffs gebildet ist, insbesondere einem thermoplastischen Urethanwerkstoff, und der Formkörper einen einheitlich gleichen Farbgrad besitzt oder zumindest einen Bereich mit von diesem Farbgrad abweichenden Farbgrad aufweist.

Auf diese Weise kann auch das optische Erscheinungsbild des Formkörpers und damit der Motorradsitzanordnung vielfältig angepasst werden, so sind beispielsweise verschiedene Bereiche oder Abschnitte des Formkörpers in unterschiedlichen Farbgestaltungen möglich, was bei der Verwendung eines bekannten Bezugsstoff einer bekannten Motorradsitzanordnung nicht der Fall ist.

Es ist nach einer Weiterbildung der Erfindung auch vorgesehen, dass ein den äußeren Randbereich der Tragstruktur übergreifender Abschnitt des Formkörpers zumindest entlang eines Bereichs seiner Längserstreckung mittels kraftschlüssiger oder formschlüssiger oder stoffschlüssiger Mittel oder einer Kombination daraus am Randbereich der Tragstruktur vorzugsweise lösbar festgelegt ist.

Diese zusätzlichen Mittel, bei denen es sich beispielsweise um Halteklammern, Schrauben, Nieten, Klebstoffe, thermische Schmelzverbindungen, Sicherungsscheiben, Schnappelemente, Stiftverbindungen, Feder-Nutverbindungen und dergleichen handeln kann, sind optionale Haltemittel oder Hilfsmittel oder Sicherungsmittel, welche eine Festlegung des Formkörpers an den äußeren Randbereichen der Tragstruktur unterstützen. Solche zusätzlichen Mittel können bei Motorrädern, die in Geländesportwettbewerben eingesetzt werden von Vorteil sein, da solche Motorräder starken Stößen oder Erschütterungen ausgesetzt sind und darüber hinaus nach einem Sturz des Motorrads wieder aufgerichtet werden müssen und es sich gezeigt hat, dass ein solches Motorrad dann in der Eile des Gefechts häufig an der Motorradsitzanordnung gegriffen und über eine Zugkraft daran aufgehoben wird und die zusätzlichen Mittel dann dafür sorgen, dass ein Benutzer des Motorrads dabei nicht versehentlich den Formkörper von der Motorradsitzanordnung abzieht.

Diese Mittel sind daher optional und müssen beispielsweise bei einem Tourenmotorrad, welches im Regelfall nicht über einen Griff an die Motorradsitzanordnung aufgerichtet wird, nicht angebracht werden.

Es ist nach einer Weiterbildung der Erfindung auch vorgesehen, dass ein den äußeren Randbereich der Tragstruktur übergreifender Abschnitt des Formkörpers einstückig mit dem Abschnitt ausgebildete Haltemittel aufweist, welche zur Anordnung in Ausnehmungen des Randbereichs der Tragstruktur ausgebildet sind.

Bei diesen Haltemitteln kann es sich beispielsweise um stiftförmige oder pilzförmige Haltemittel handeln, die einstückig an dem oder den entsprechenden Abschnitten des Formkörpers, die die äußeren Randbereiche der Tragstruktur übergreifen, ausgebildet sind und beispielsweise nach der Art eine Stiftverbindung in Ausnehmungen der Tragstruktur an den äußeren Randbereichen eingeclipst werden können und in den Ausnehmungen so lösbar festgelegt werden.

Es ist nach einer Weiterbildung der Erfindung auch vorgesehen, dass an dem äußeren Randbereich der Tragstruktur Haltemittel angeordnet oder angeformt sind, welche mit Ausnehmungen des den äußeren Randbereich der Tragstruktur übergreifenden Abschnitts des Formkörpers in Eingriff bringbar sind. Bei diesen Haltemitteln kann es sich beispielsweise um Stiftkörper mit einem oder mehr als einem Befestigungshaken handeln, der in eine Ausnehmung oder Ausnehmungen des den äußeren Randbereich der Tragstruktur übergreifenden Abschnitts des Formkörpers eingreift.

Es ist nach einer Weiterbildung der Erfindung auch vorgesehen, dass ein den äußeren Randbereich der Tragstruktur übergreifender Abschnitt des Formkörpers mit einer einstückig mit dem Abschnitt versehenen Querschnittserweiterung versehen ist, die von einem lösbar mit der Tragstruktur in Eingriff bringbaren Haltemittel gegen den Randbereich beaufschlagbar ist.

Die Querschnittserweiterung kann beispielsweise ein am Abschnitt des Formkörpers innenliegend angeordneter oder angeformter Wulstkörper sein, der von einem Halteabschnitt übergegriffen und gegen den äußeren Randbereich der Tragstruktur beaufschlagt oder gedrückt wird, wobei der Halteabschnitt an der Tragstruktur beispielsweise mittels einer Schraubenverbindung lösbar festgelegt werden kann.

Schließlich ist es nach einer Weiterbildung der Erfindung auch vorgesehen, dass an einem rückseitigen Bereich der Motorradsitzanordnung eine Ausnehmung ausgebildet ist, welche zur Aufnahme einer Beleuchtungseinrichtung ausgebildet ist, und dass der elastische dreidimensionale Formkörper zur Überdeckung der Ausnehmung ausgebildet ist und im Bereich der Ausnehmung translucent ausgebildet ist.

Diese Konfiguration macht es möglich, dass beispielsweise ein Rücklicht des Motorrads in die Ausnehmung der Motorradsitzanordnung eingebracht wird und die Ausnehmung zusammen mit dem Rücklicht von dem Formkörper überdeckt wird, der im Bereich der Ausnehmung beziehungsweise des Rücklichts lichtdurchlässig ausgebildet ist, sodass auf diese Weise das Rücklicht vollständig in die Motorradsitzanordnung integriert ist.

Die Erfindung wird im folgenden anhand der Zeichnung näher erläutert. Diese zeigt in:
Fig. 1 eine perspektivische Draufsichtansicht auf eine Ausführungsform eines Formkörpers zur Bildung einer Motorradsitzanordnung für einen Beifahrer oder Sozius;
Fig. 2 eine perspektivische Darstellung der Ausführungsform des Formkörpers nach Fig. 1 in einer Ansicht von unten;
Fig. 3 eine Ansicht von unten auf eine Motorradsitzanordnung mit dem an einer Tragstruktur angeordneten Formkörper nach Fig. 2;
Fig. 4 eine Ansicht ähnlich derjenigen nach Fig. 3, die eine zweite Ausführungsform eines Formkörpers zeigt;
Fig. 5 eine Ansicht von vorne auf die Motorradsitzanordnung nach Fig. 3;
Fig. 6 eine Ansicht von hinten auf die Motorradsitzanordnung nach Fig. 3;
Fig. 7 eine Schnittansicht von links auf die Motorradsitzanordnung nach Fig. 3;
Fig. 8 eine Detailansicht des Ausschnitts "A" nach Fig. 7;
Fig. 9 eine Ansicht von hinten auf eine Querschnittsansicht der Motorradsitzanordnung nach Fig. 3;
Fig. 10 eine Querschnittansicht einer Motorradsitzanordnung mit einer modifizierten Ausführungsform eines Formkörpers;
Fig. 11 eine Querschnittansicht einer Motorradsitzanordnung mit einer weiteren Ausführungsform eines Formkörpers;
Fig. 12 eine die Teilschnittansicht einer Motorradsitzanordnung mit einem mittels Halteklammern befestigten Formkörper;
Fig. 13 eine Teilschnittansicht ähnlich derjenigen nach Fig. 12, die eine Motorradsitzanordnung mit einem Formkörper zeigt, der mittels Sicherungsscheiben festgelegt ist;
Fig. 14 eine Teilschnittansicht ähnlich derjenigen nach Fig. 12, die eine Motorradsitzanordnung mit einem Formkörper zeigt, der mittels am Formkörper angeformter Haltemittel an der Tragstruktur der Motorradsitzanordnung festgelegt ist;
Fig. 15 eine Teilschnittansicht ähnlich derjenigen nach Fig. 12, die eine Motorradsitzanordnung mit einem Formkörper zeigt, der mittels an der Tragstruktur angeformter Haltemittel festgelegt ist;
Fig. 16 eine Teilschnittansicht ähnlich derjenigen nach Fig. 12, eine Motorradsitzanordnung mit einem Formkörper zeigt, der mittels einer am Formkörper angeformter Querschnittserweiterung festgelegt ist;
Fig. 17 eine Teilschnittansicht einer Motorradsitzanordnung zur Erläuterung von am Formkörper vorgesehener längs verlaufender Vertiefungsnuten;
Fig. 18 eine perspektivische Längsschnittansicht einer Motorradsitzanordnung nach einer Ausführungsform gemäß der vorliegenden Erfindung;
Fig. 19 die Motorradsitzanordnung nach Fig. 18 in einer Ansicht von unten;
Fig. 20 eine perspektivische Darstellung einer Motorradsitzanordnung mit einem transparenten Formkörper;

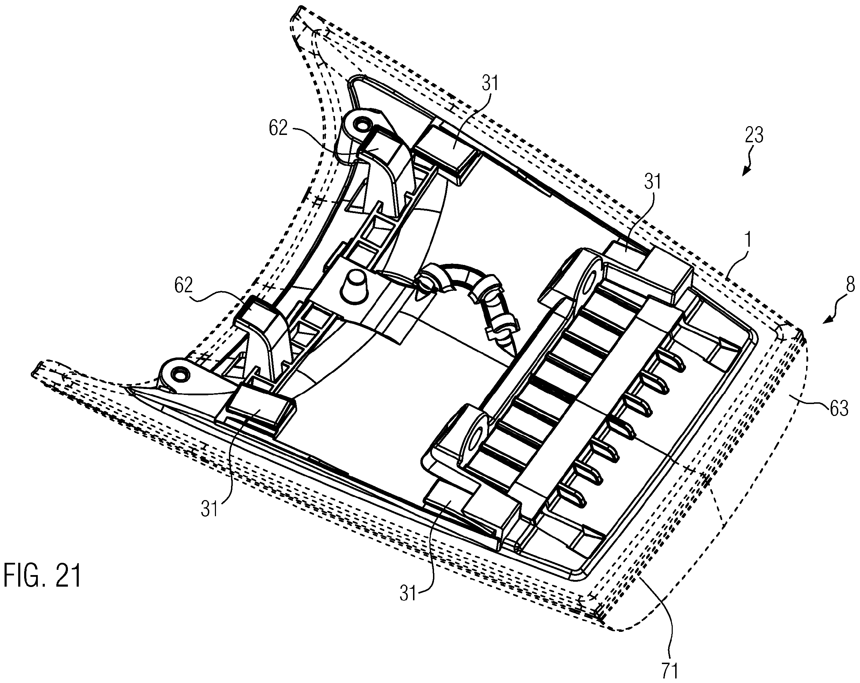

Fig. 21 eine perspektivische Darstellung der Motorradsitzanordnung nach Fig. 20 in einer Ansicht von unten; und
Fig. 22 eine Seitenansicht eines Motorrads mit der Motorradsitzanordnung.

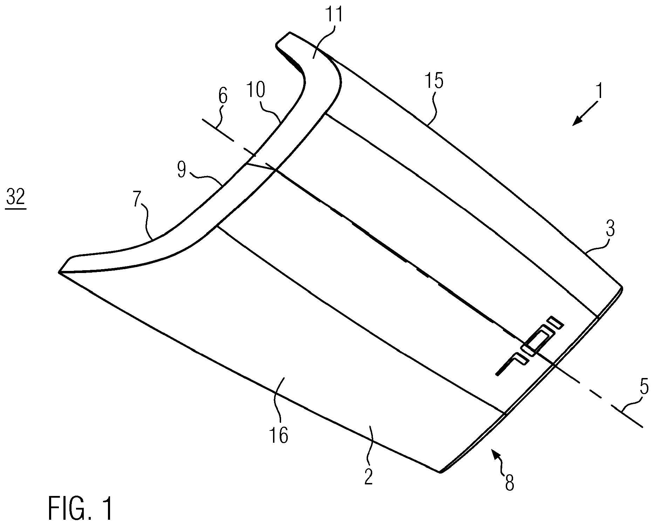

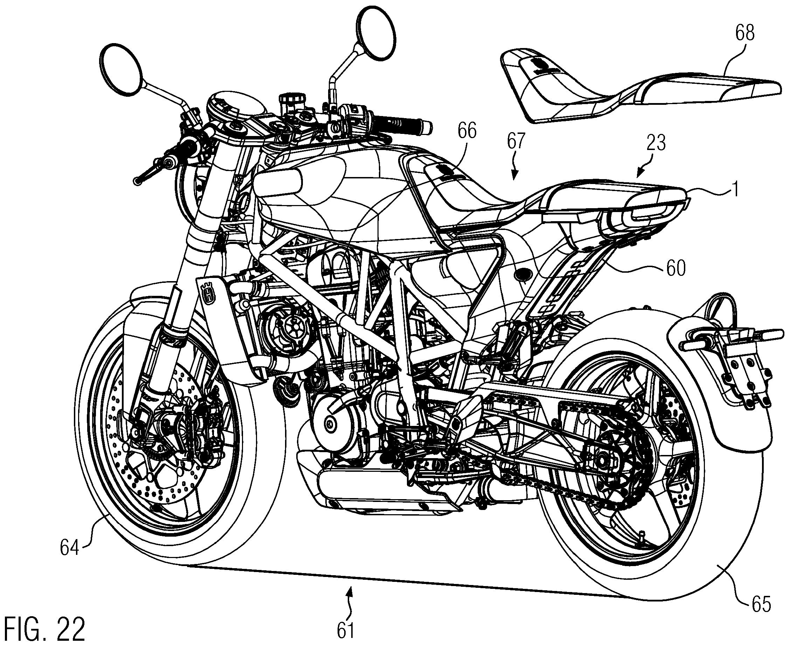

Fig. 1 der Zeichnung zeigt eine perspektivische Draufsichtansicht auf eine Ausführungsform eines Formkörpers zur Bildung einer Motorradsitzanordnung für einen Beifahrer oder Sozius eines Motorrads 61 nach Fig. 22.

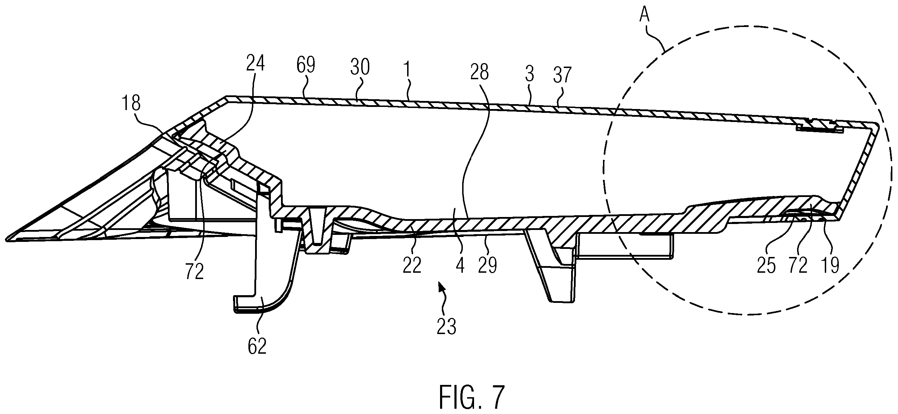

Der Formkörper 1 weist eine dreidimensionale Ausbildung auf und besitzt eine als Sitzfläche 2 dienende Oberseite 3 und ist bei der dargestellten Ausführungsform aus einem thermoplastischen Polyurethan gefertigt, der einen Shorehärtegrad Shore A nach DIN 53505 von 75 bis 80 aufweist. Der Formkörper 1 ist elastisch ausgebildet, sodass er sich bei einem an der Sitzfläche 2 mit seinem Gesäß abstützenden Benutzer elastisch verformen kann und zusammen mit dem beispielsweise in der Fig. 7 dargestellten Sitzpolster 4 dem Benutzer Halt, Unterstützung und Sitzkomfort bietet.

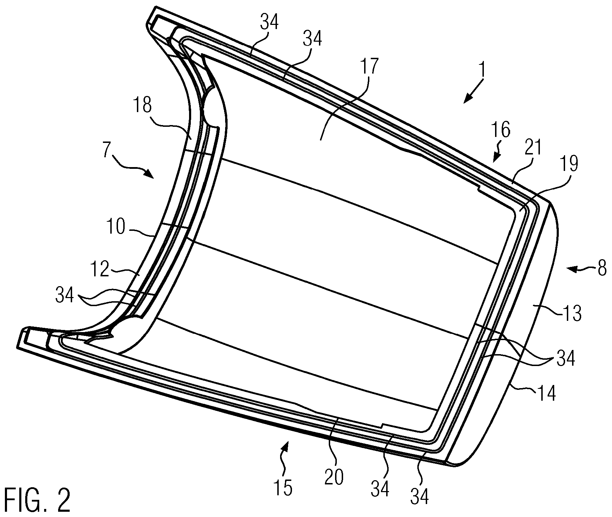

Wie es ohne weiteres anhand von Fig. 1 der Zeichnung ersichtlich ist, besitzt der Formkörper 1 in Richtung einer Längsmittelachse 5 betrachtet, welche in der Längsmittelebene 6 verläuft, eine Vorderseite 7 und eine Rückseite 8, wobei bei der dargestellten Ausführungsform die Vorderseite 7 in einem schrägen Winkel zur Oberseite 3 verläuft und an der Stirnkante 9 eine Schnittlinie 10 ausbildet oder aufweist, welche die obere Fläche 11 an der Vorderseite 7 mit der unteren Fläche 12 der Vorderseite 7 nach Fig. 2 gemeinsam ausbildet.

Der Formkörper 1 besitzt an der Rückseite 8 eine näher anhand von Fig. 2 der Zeichnung ersichtliche schräge Fläche 13, welche eine Schnittlinie 14 ausbildet oder aufweist, welche die schräge Fläche 13 zusammen mit der Sitzfläche 2 ausbildet.

Die Seitenflächen 15 und 16 des Formkörpers 1 dienen als Auflageflächen für die Innenschenkel des auf der Sitzfläche 2 Platz nehmenden Benutzers.

Fig. 2. Zeichnung zeigt, dass der Formkörper 1 einen Aufnahmeraum 17 ausbildet, der zur Aufnahme des beispielsweise in Fig. 7 im Schnitt dargestellten Sitzpolsters 4 dient.

Darüber hinaus weist der Formkörper 1 sowohl an der Vorderseite 7 als auch an der Rückseite 8 und im Bereich der beiden Seitenflächen 15, 16 jeweils einstückig mit dem Formkörper 1 ausgebildete Abschnitte 18, 19, 20 und 21 auf, die ebenfalls elastisch ausgebildet sind und den äußeren Randbereich 72, beziehungsweise die äußeren Randbereiche 72 der Tragstruktur 22 der Motorradsitzanordnung 23 übergreifen und so für eine Festlegung des Formkörpers 1 an der Tragstruktur 22 sorgen.

Der an der Vorderseite 7 des Formkörpers 1 ausgebildete Abschnitt 18 übergreift dabei den vorderen Randabschnitt 24 der Tragstruktur 22, wie dies anhand von Fig. 7 der Zeichnung ersichtlich ist, während der an der Rückseite 8 des Formkörpers 1 ausgebildete Abschnitt 19 den hinteren Randabschnitt 25 der Tragstruktur 22 übergreift.

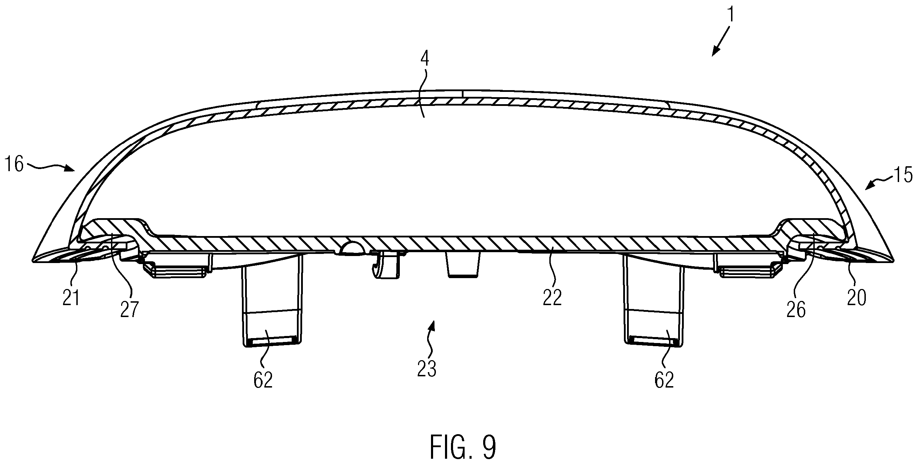

Der an der rechten Seitenfläche 15 des Formkörpers 1 ausgebildete Abschnitt 20 übergreift den Randabschnitt 26, während der an der linken Seitenfläche 16 des Formkörpers 1 ausgebildete Abschnitt 21 den Randabschnitt 26 der Tragstruktur 22 übergreift, wie dies anhand von Fig. 9. Zeichnung ersichtlich ist.

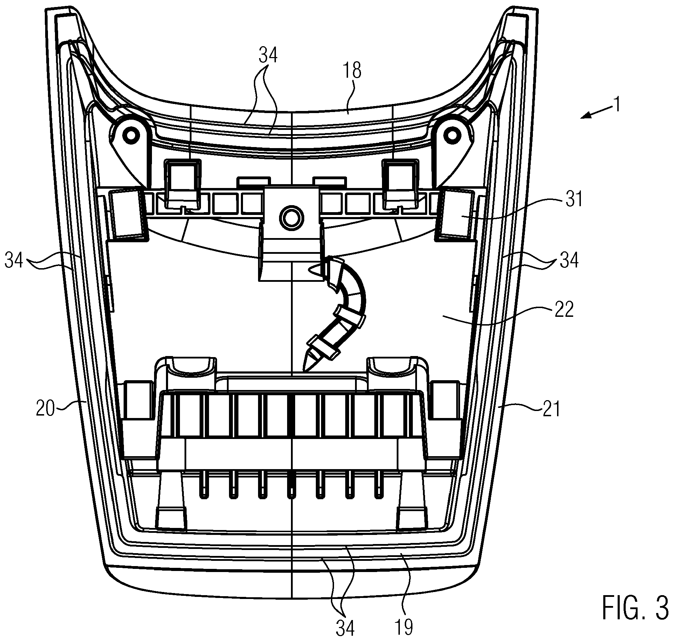

Fig. 9. der Zeichnung zeigt darüber hinaus auch, dass der Formkörper 1 in einer Querschnittsansicht U-förmig ausgebildet ist und sich die jeweiligen Abschnitte 20, 21 des Formkörpers 1 in Richtung von den Seitenflächen 15, 16 ausgehend in Richtung nach innen gerichtet zum Sitzpolster 4 hin erstrecken. Fig. 3 der Zeichnung, die den Formkörper 1 an der Tragstruktur 22 angeordnet darstellt, zeigt, dass sich die Abschnitte 18 und 19 des Formkörpers 1 ebenfalls in Richtung nach innen gerichtet zum Sitzpolster 4 hin erstrecken und somit die Überlappungsabschnitte oder Überdeckungsabschnitte darstellenden Abschnitte 18, 19, 20 und 21 des Formkörpers 1 jeweils in Richtung nach innen gerichtet erstrecken und die jeweiligen äußeren Randbereiche oder Randabschnitte 24, 25, 26, 27 der Tragstruktur 22 übergreifen, wodurch allein schon durch die zwischen dem Formkörper 1 beziehungsweise dessen Abschnitten 18, 19, 20 und 21 und dem Randbereich beziehungsweise den Randabschnitten 24, 25, 26, 27 der Tragstruktur 22 ausgebildete Eigenspannung der Formkörper 1 fest, aber lösbar an der Tragstruktur 22 gehalten wird.

Wie es sich ohne weiteres anhand von Fig. 7 der Zeichnung ergibt, weist die Tragstruktur 22 eine dem Sitzpolster 4 zugewandte erste Seite 28 oder Oberseite und eine vom Sitzpolster 4 abgewandte zweite Seite 29 oder Unterseite auf. Der Formkörper 1 besitzt eine dem Sitzpolster 4 zugewandte Unterseite 30 und die bereits angesprochene und als Sitzfläche 2 dienende Oberseite 3. Die Tragstruktur 22 kann über die beispielsweise anhand von Fig. 3 der Zeichnung ersichtlichen Auflagen 31 an einem Rahmenbauteil 60 des Motorrads 61 aufgelegt beziehungsweise abgestützt werden.

Fig. 1 der Zeichnung zeigt den auf einer Unterlage 32, bei der es sich beispielsweise um eine Tischfläche oder dergleichen handeln kann, angeordneten beziehungsweise aufliegenden Formkörper 1, der über die anhand der in Fig. 2 der Zeichnung ersichtlichen Abschnitte 19, 20 und 21 an der Unterlage 32 aufliegt.

Der Formkörper 1 besitzt dabei im Gegensatz zu einem aus einem Bezugsstoff, Leder oder Kunstleder oder einem anderen flächigen Gebilde gefertigten Sitzbezug eine solche Eigensteifigkeit, dass der Formkörper 1 seine dreidimensionale Form beibehält, wenn er vom Sitzpolster 4 getrennt an der Unterlage 32 angeordnet wird.

Wird demgegenüber ein von einem Sitzpolster für eine Motorradsitzanordnung getrennter bekannter Sitzbezug, der aus einem Bezugsstoff, Leder oder Kunstleder oder einem anderen flächigen Gebilde gefertigt wird, zum Vergleich auf einer solchen Unterlage 32 angeordnet, dann sinkt er in sich zusammen, verliert also seine definierte dreidimensionale Ausgestaltung oder Raumform, die er an dem Sitzpolster angeordnet noch aufweist, da er keine mit dem erfindungsgemäßen Formkörper vergleichbare Eigensteifigkeit aufweist.

Fig. 2 der Zeichnung zeigt eine Ausführungsform des Formkörpers 1, bei der die benachbarten oder einander zugeordneten Abschnitte 18 und 21 sowie 18 und 20 jeweils einstückig miteinander verbunden sind. In ähnlicher Weise sind die benachbarten oder einander zugeordneten Abschnitte 19 und 21 sowie 19 und 20 einstückig miteinander verbunden.

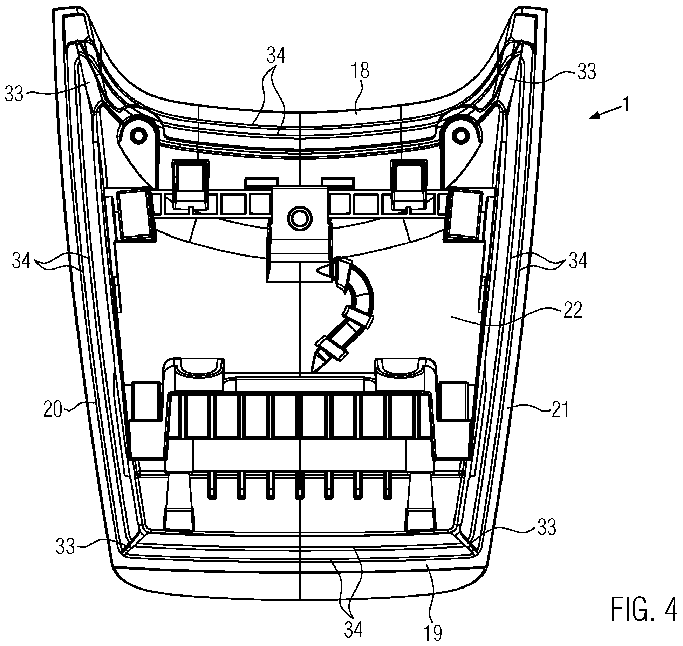

Im Vergleich dazu zeigt die in Fig. 4. Zeichnung dargestellten Ausführungsform des Formkörpers 1, dass zwischen den Abschnitten 18 und 21 sowie 18 und 20 jeweils ein Freiraum oder Schlitz 33 ausgebildet ist und auch zwischen den Abschnitten 19 und 21 sowie 19 und 20 jeweils ein Freiraum oder Schlitz 33 ausgebildet ist. Der Freiraum oder Schlitz 33 sorgt dafür, dass der Formkörper 1 aus einer Form zur Herstellung des Formkörpers 1 leichter entnommen beziehungsweise ausgeformt werden kann.

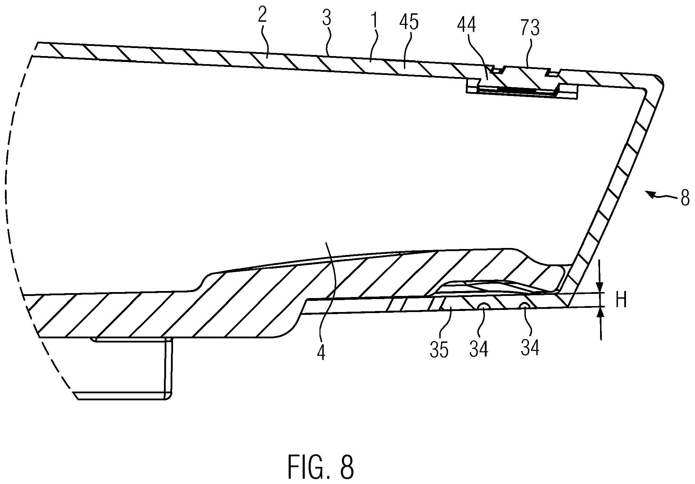

Der Formkörper 1 weist an seiner Unterseite im Bereich der Abschnitte 18, 19, 20 und 21 jeweils zwei längs verlaufende Vertiefungen 34 auf, die im jeweiligen Abschnitt parallel zueinander verlaufen, wie dies Fig. 2. Zeichnung zeigt. Anhand von beispielsweise Fig. 8 der Zeichnung ist es ersichtlich, dass die längs verlaufenden Vertiefungen 34 in einer Querschnittsansicht halbkreisförmig ausgebildet sind und eine Tiefe aufweisen, die einem Teilbetrag der Wandstärke H des Profils 35 entspricht, welches die Abschnitte 18, 19, 20 und 21 des Formkörpers 1 ausbildet.

Die längs verlaufenden Vertiefungen 34 dienen dazu, eine Verformung des Profils 35 aufzunehmen, die sich dann einstellt, wenn die Abschnitte 18, 19, 20 und 21 über zusätzliche Haltemittel an den äußeren Randabschnitten 24, 25, 26 und 27 fixiert werden.

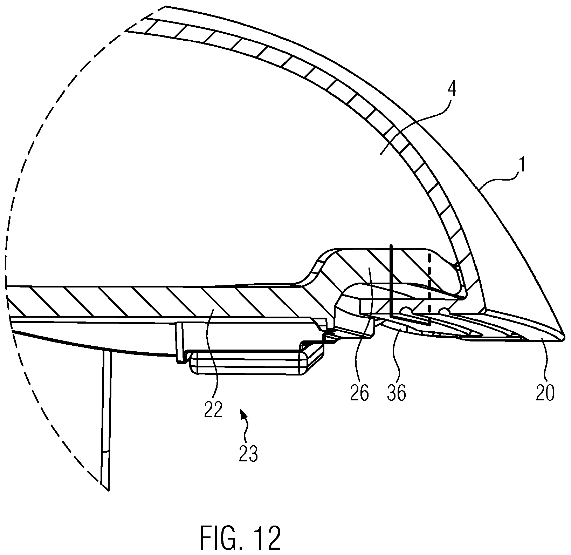

Fig. 12 der Zeichnung zeigt einen solchen Fall, bei dem exemplarisch der Abschnitt 20 des Formkörpers 1 über Haltemittel in der Form von Halteklammern 36 an dem Randabschnitt 26 festgelegt wird. In ähnlicher Weise können auch die anderen Abschnitte 19, 20 und 21 an den Randabschnitten 24, 25 und 27 fixiert werden. Diese zusätzliche Befestigung des Formkörpers 1 an der Tragstruktur 22 der Motorradsitzanordnung 23 dient dazu zu verhindern, dass der Formkörper 1 unbeabsichtigt vom Benutzer vom Sitzpolster 4 und damit von der Motorradsitzanordnung 23 abgezogen wird, wie dies vorstehend beispielsweise anhand eines Motorrads bereits beschrieben worden ist, welches zu Geländesportwettbewerben eingesetzt wird und bei dem es deshalb durchaus vorkommen kann, dass das gestürzte Motorrad vom Benutzer oder Fahrer des Motorrads wieder aufgehoben wird und dieser dazu das Motorrad beispielsweise auch an der Motorradsitzanordnung 23 greift und daran wieder aufrichtet.

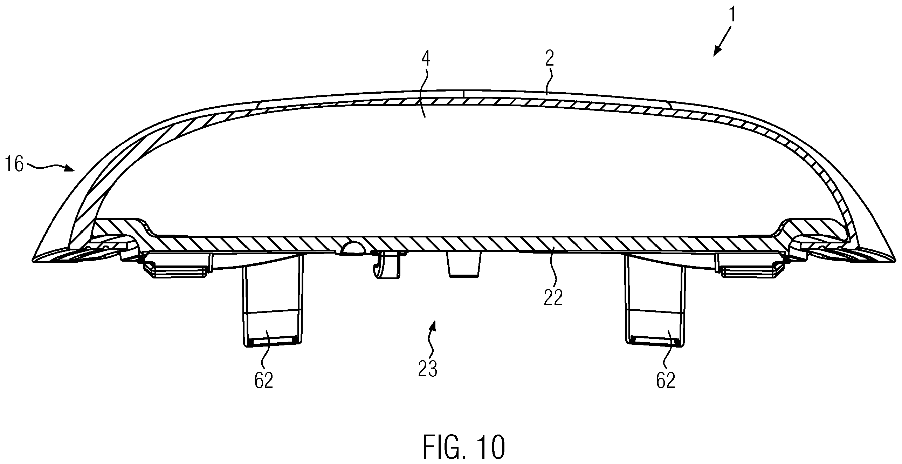

Fig. 7 der Zeichnung zeigt einen Formkörper 1, dessen Außenkontur 37 überall die gleiche Wandstärke aufweist, während im Vergleich hierzu die in Fig. 10 dargestellte Ausführungsform des Formkörpers 1 im Bereich der Sitzfläche 2 eine Wandstärke aufweist, die deutlich geringer ist als die Wandstärke im Bereich der Seitenfläche 16, die beispielsweise zu Zwecken des Verschleißschutzes oder der höheren Festigkeit der Seitenflächenbereiche 15, 16 dient. Auch an der Seitenfläche 15 oder an anderen Bereichen oder Abschnitten des Formkörpers 1 kann die Wandstärke daher größer oder auch kleiner ausgebildet sein, als an anderen Bereichen oder Abschnitten des Formkörpers 1.

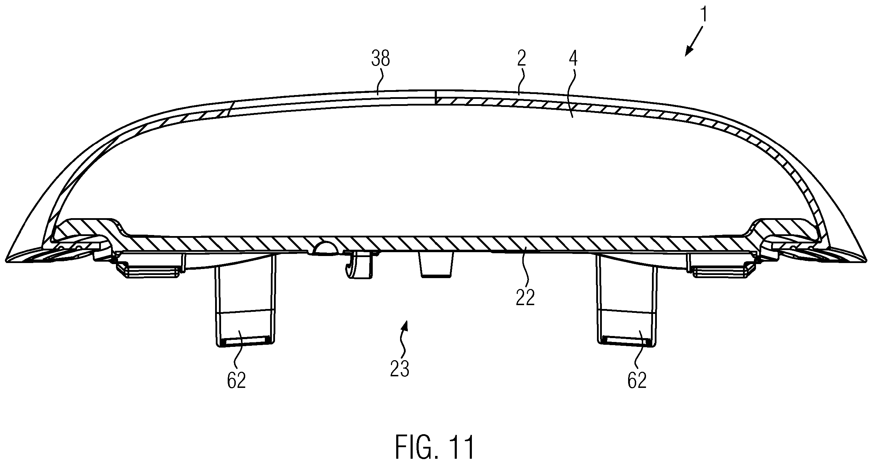

Fig. 11 der Zeichnung zeigt wiederum eine modifizierte Ausführungsform des Formkörpers 1, der der Erläuterung halber einen Abschnitt 38 im Bereich der Sitzfläche 2 aufweist, der sich hinsichtlich seiner Ausgestaltung beziehungsweise seines Aufbaus von dem den Abschnitt 38 umgebenden Bereich der Sitzfläche 2 unterscheidet. Mit dem Begriff der Unterscheidung wird hier zum Ausdruck gebracht, dass der Abschnitt 38 einen anderen Shorehärtegrad aufweisen kann als die den Abschnitt 38 umgebenden Bereiche der Sitzfläche 2 und/oder auch der Abschnitt 38 einen anderen Farbgrad aufweisen kann als die den Abschnitt 38 umgebenden Bereiche.

So ist es auf diese Weise möglich, dass der Formkörper 1 an unterschiedlichen Abschnitten oder Bereichen mehrere Farbgrade aufweisen kann und es ist auch möglich, dass der Formkörper 1 an unterschiedlichen Abschnitten oder Bereichen unterschiedliche Härtegrade, Texturen oder Oberflächenrauhigkeiten aufweisen kann.

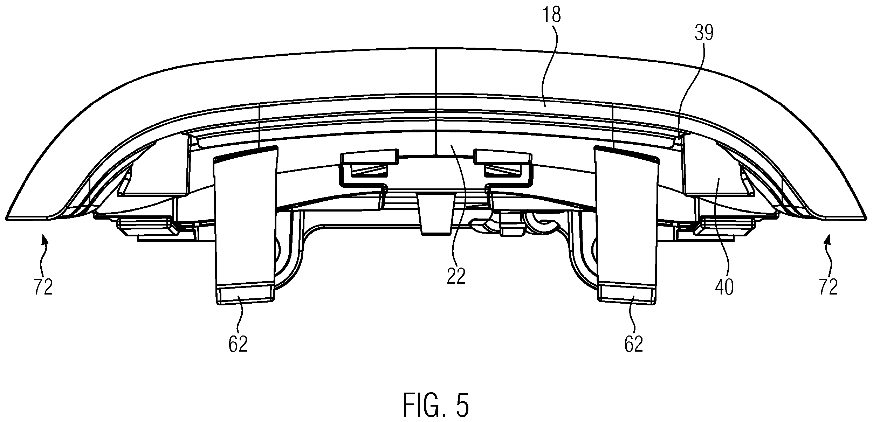

Fig. 5 der Zeichnung zeigt exemplarisch anhand des Abschnitts 18, dass die Abschnitte auch Ausnehmungen oder Aussparungen 39 aufweisen können, die beispielsweise für die Anbringung von Montageflächen 40 benötigt werden, über die die Tragstruktur 22 und damit die Motorradsitzanordnung 23 an einem Rahmenbauteil eines Motorrads festgelegt werden kann.

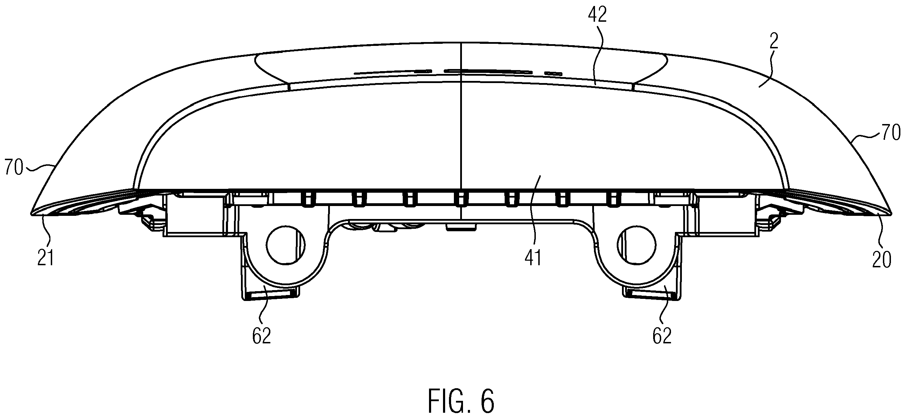

Fig. 6 der Zeichnung zeigt, dass im Übergangsbereich zwischen zwei Formflächen, im vorliegenden Fall der Sitzfläche 2 und der hinteren Stirnseite 41 des Formkörpers 1, also im Bereich der Schnittlinie 14 ein Strukturbauteil in der Form eines Kederbandes 42 vorgesehen sein kann, welches bei der Herstellung des Formkörpers 1 in vorteilhafter Weise in die Spritzgießvorgang eingelegt wird. Darüber hinaus zeigt Fig. 6 auch die an beiden Seitenflächen oder Schenkel 70 sich anschließenden nach innen gerichtet verlaufenden Abschnitte 20 und 21 des Formkörpers 1.

Fig. 7 der Zeichnung zeigt den Sitzpolsterbezug 69 und macht deutlich, dass in den Formkörper 1 im Gegensatz zu einem Sitzpolsterbezug, der aus einem flächigen Werkstoff gebildet wird, auch dreidimensionale Muster, Darstellungen, Bilder, Logos oder Schriftzüge integriert werden können da der dreidimensionale elastische Formkörper 1 eine Außenform oder Außenhülle oder Außenhaut aufweist, die verglichen mit einem Sitzpolsterbezug aus einem flächigen oder textilen Werkstoff, deutlich größere Wandstärke aufweist, sodass in die die Außenform des Formkörpers 1 ausbildenden Wandungen die dreidimensionalen Muster oder dergleichen integriert werden können.

Bei der in Fig. 7 dargestellten Ausführungsform des Formkörpers 1 ist im Bereich der Rückseite 8 ein Schriftzug 73 "701" integriert, wie dies in der Ansicht von oben nach Fig. 1 ersichtlich ist. Da sich der dreidimensionale Schriftzug "701" von der Oberseite 3 des Formkörpers 1 in Richtung nach unten erstreckt, besitzt das Sitzpolster 4 eine Freistellung oder Ausnehmung 43 zur Aufnahme des rückspringenden Bereichs 44 des die Sitzfläche 2 ausbildenden Bereichs der Außenhülle 45 des Formkörpers 1.

Vorstehend wurde unter Bezugnahme auf Fig. 12 der Zeichnung bereits die Möglichkeit der zusätzlichen oder optionalen Festlegung des Formkörpers 1 an der Tragstruktur 22 mittels Hilfsmitteln oder Haltemitteln in der Form von Halteklammern 36 erläutert.

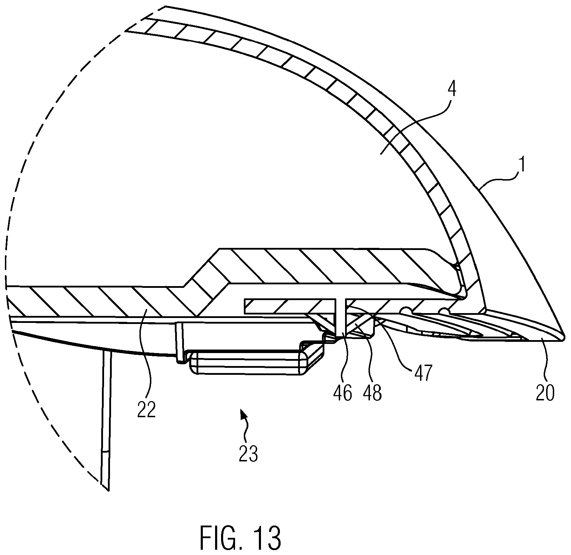

Fig. 13 der Zeichnung zeigt eine weitere Ausführungsform einer Motorradsitzanordnung 23 mit einem an einer Tragstruktur 22 angeordneten Formkörper 1. Bei der dargestellten Ausführungsform besitzt der äußere Randbereich 72 beziehungsweise besitzen die äußeren Randabschnitte der Tragstruktur 22 sich in Richtung nach unten gerichtet erstreckende Stifte oder Pins 46, welche Ausnehmungen 47 der nach innen gerichtet erstreckenden Abschnitte 18, 19, 20 und 21 durchsetzen. Die Abschnitte werden dann von unten mittels scheibenförmiger Verbindungsklammern 48 fixiert, die an den Stiften 46 vorzugsweise lösbar festgelegt werden.

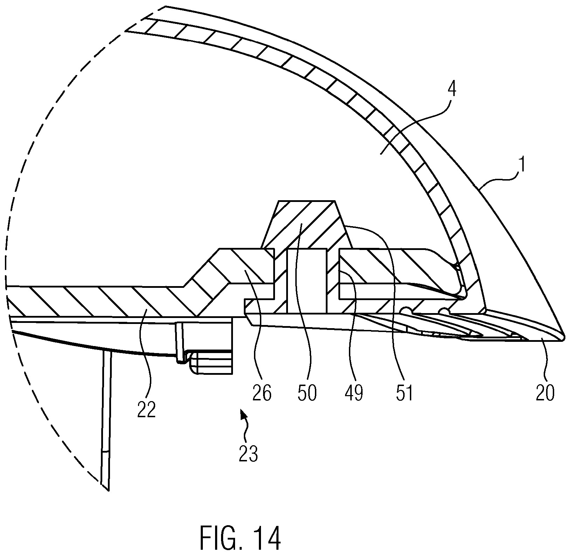

Fig. 14 der Zeichnung zeigt eine weitere Ausführungsform einer Motorradsitzanordnung 23 mit einem an der Tragstruktur 22 angeordneten Formkörper 1. Wie es ohne weiteres ersichtlich ist, besitzt bei dieser Ausführungsform die Tragstruktur 22 im Bereich der Randabschnitte 24, 25, 26, 27, von denen in der Fig. 14 exemplarisch nur der Randabschnitt 26 dargestellt ist, Ausnehmungen oder Durchlässe 49, die von am Formkörper 1 einstückig damit ausgebildeten, pilzförmigen und elastischen Haltemittel 50 durchsetzt werden können, indem das pilzförmige Haltemittel 50 durch die Ausnehmung 49 hindurch geführt wird und sich der pilzförmige Kopf 51 des Haltemittels 50 wieder erweitert, sodass der Formkörper 1 auf diese Weise formschlüssig an der Tragstruktur 22 festgelegt werden kann.

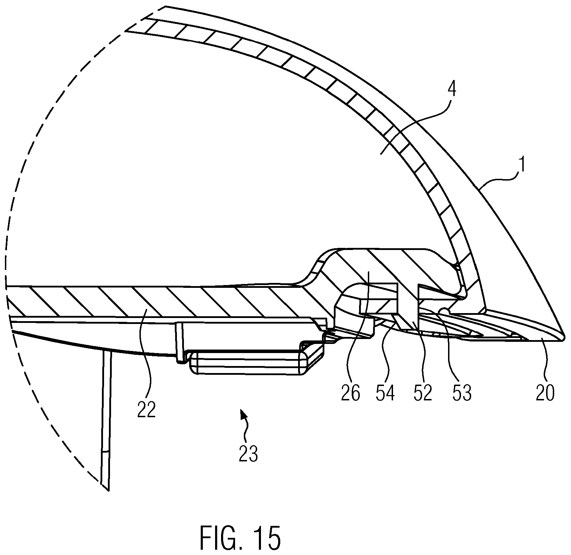

Fig. 15 der Zeichnung zeigt eine weitere Ausführungsform einer Motorradsitzanordnung 23 mit einem an der Tragstruktur 22 angeordneten Formkörper 1. Bei dieser Ausführungsform der Motorradsitzanordnung 23 weist die Tragstruktur 22 im Bereich der außenliegenden Randabschnitte 24, 25, 26 und 27, von denen in der Fig. 15 exemplarisch nur der Randabschnitt 26 dargestellt ist, sich in Richtung nach unten gerichtet erstreckende hakenförmige Haltemittel 52 auf, welche Ausnehmungen 53 des Formkörpers 1 durchsetzen können und mit dem am Haltemittel 52 angeordneten Haken 54 den Abschnitt 20 - dies gilt entsprechend auch für die anderen Abschnitte 19, 20 und 21 des Formkörpers 1 - fixieren können. Obwohl bei der dargestellten Ausführungsform des Haltemittels 52 nur ein Haken 54 vorgesehen ist, kann am Haltemittel 52 auch an der dem dargestellten Haken 54 gegenüberliegenden Seite ein weiterer Haken 54 einstückig mit dem Haltemittel 52 angeordnet vorgesehen sein.

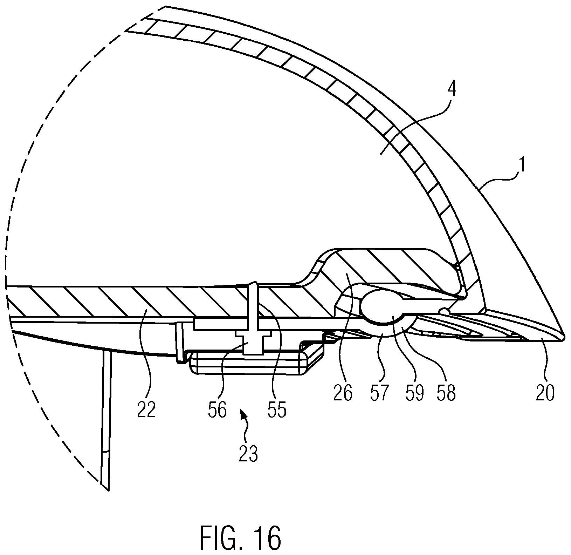

Fig. 16 der Zeichnung zeigt eine weitere Ausführungsform einer Motorradsitzanordnung 23 mit einem an der Tragstruktur 22 angeordneten Formkörper 1. Bei dieser Ausführungsform der Motorradsitzanordnung 23 weist die Tragstruktur 22 in einem vom Abschnitt 26 aus betrachtet innen liegenden Bereich eine Bohrung oder Ausnehmung 55 auf, die von einem Haltemittel in der Form eines Stifts oder einer Schraube 56 durchsetzt werden kann. Wie es ohne weiteres ersichtlich ist, kann mit dem Haltemittel 55 ein beispielsweise aus einem Kunststoffwerkstoff gefertigtes Haltebauteil 57 lösbar an der Tragstruktur 22 festgelegt werden. Das Haltebauteil 57 weist einen Schenkel 58 auf, der eine einstückig mit dem Formkörper 1 ausgebildete Querschnittserweiterung 59 übergreift und gegen den Randbereich beziehungsweise Randabschnitt 26 beaufschlagt wird.

Über ein einfaches Lösen der Schraube 56 kann dann das Haltebauteil 57 von der Tragstruktur 22 abgenommen werden und danach auch der Formkörper 1 von der Tragstruktur 22 abgenommen werden.

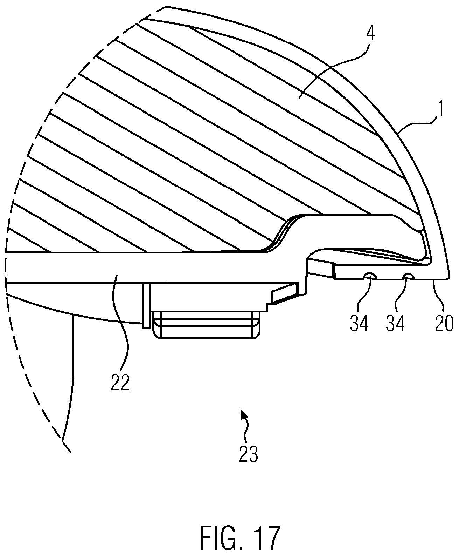

Fig. 17. Zeichnung zeigt eine Teilschnittansicht einer Motorradsitzanordnung 23 mit dem Formkörper 1 und an dem exemplarisch dargestellten Abschnitt 20 ausgebildeten Vertiefungen 34.

Die Teilschnittansicht nach Fig. 17 der Zeichnung verläuft quer zur Längsmittelachse 5, sodass es ersichtlich ist, dass die Vertiefungen 34 in Längsrichtung des Abschnitts 20 verlaufen. Fig. 2 und 4. Zeichnung zeigen darüber hinaus, dass entsprechende Vertiefungen 34 auch an den weiteren Abschnitten 18, 19 und 21 des Formkörpers 1 ausgebildet sein können. Diese Abschnitte übergreifen jeweils den äußeren Randbereich der Tragstruktur 22 und die Vertiefungen 34 laufen jeweils zumindest entlang eines Bereichs der Längserstreckung der Abschnitte 18, 19, 20 und 21.

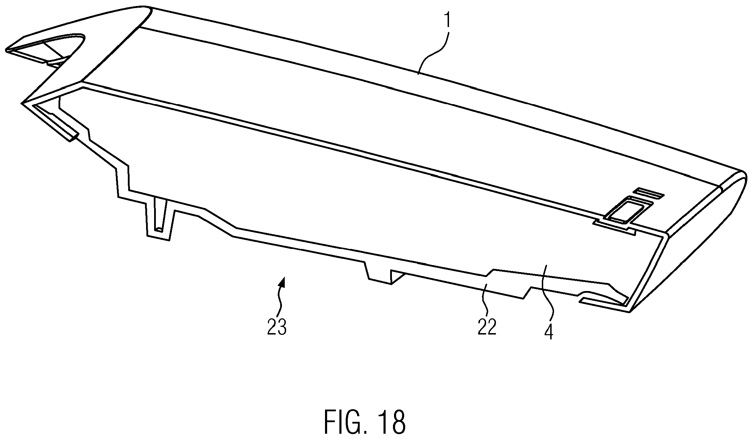

Fig. 18 der Zeichnung zeigt eine perspektivische Längsschnittansicht einer Motorradsitzanordnung 23 nach einer Ausführungsform gemäß der vorliegenden Erfindung.

Wie es ohne weiteres ersichtlich ist, überdeckt der Formkörper 1 das Sitzpolster 4 vollständig. Dies bedeutet unter anderem, dass das Sitzpolster 4 im Aufnahmeraum 17 des Formkörpers 1 vollständig aufgenommen ist. Bei dem in der Fig. 18 dargestellten Ausführungsbeispiel einer Motorradsitzanordnung 23 handelt es sich um eine Motorradsitzanordnung für einen Beifahrer oder Sozius beziehungsweise eine Beifahrerin oder Sozia. Wie dies Fig. 22 der Zeichnung zeigt, wird die erfindungsgemäße Motorradsitzanordnung 23 nach der hier dargestellten Ausführungsform am hinteren Bereich eines Motorradrahmens 60 angeordnet.

Obwohl vorstehend die Motorradsitzanordnung anhand eines Beispiels einer Sitzanordnung für den Beifahrer oder Sozius beziehungsweise eine Beifahrerin oder Sozia beschrieben wurde, ist dies nicht als Einschränkung zu sehen. Die erfindungsgemä-ße Motorradsitzanordnung kann genauso als Motorradsitzanordnung für den Fahrer oder die Fahrerin des Motorrads 61 ausgebildet werden, also ganz allgemein für einen Benutzer eines Motorrads oder auch für zwei Benutzer eines Motorrads.

Die Motorradsitzanordnung kann genauso als Sattel für ein mehr als einspuriges Fahrzeug verwendet werden, also beispielsweise für ein dreirädriges oder vierrädriges Fahrzeug, also ein Trike oder ein Quad oder beispielsweise auch für ein Schneemobil oder ein Wasserskifahrzeug, so dass der hier gewählte Begriff Motorradsitzanordnung auch einen Sattel für ein anderes einspuriges Fahrzeug als ein Motorrad mit umfasst und auch einen Sattel für ein mehr als einspuriges Fahrzeug mit umfasst oder beinhaltet.

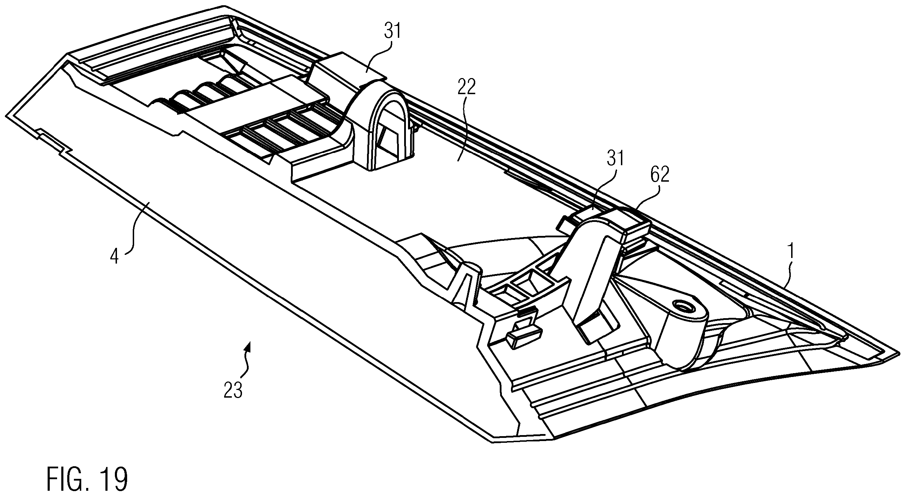

Fig. 19 der Zeichnung zeigt eine Längsschnittansicht der Motorradsitzanordnung 23 in einer Ansicht von unten. Die Tragstruktur 22 ist mit Auflagen 31 versehen, über die die Motorradsitzanordnung 23 am Motorradrahmen 60 abgestützt werden kann. Die Motorradsitzanordnung 23 kann hierzu über die Halterung 62 in eine Ausnehmung am Motorradrahmen 60 formschlüssig eingesetzt werden und über nicht näher dargestellte Verriegelungselemente lösbar verriegelt werden.

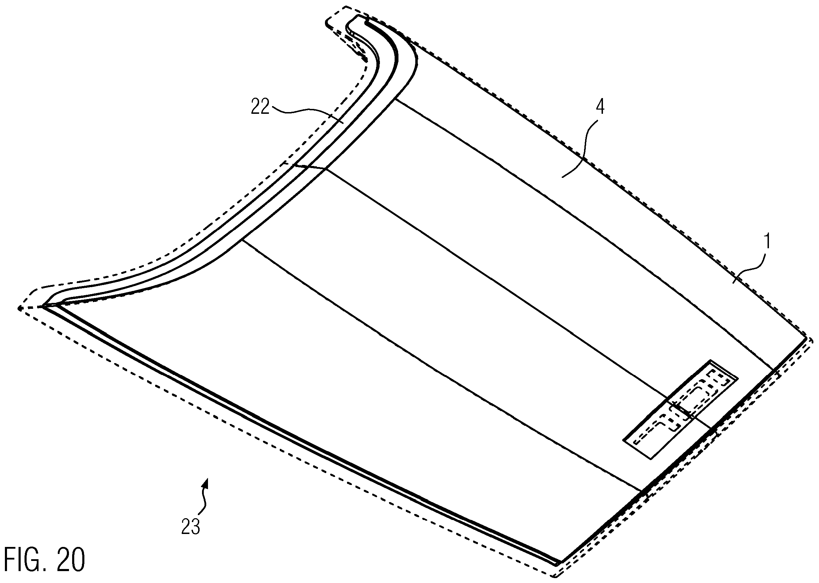

Fig. 20 der Zeichnung zeigt eine Ausführungsform einer Motorradsitzanordnung 23 mit einer Tragstruktur 22 und einem an der Tragstruktur 22 angeordneten Sitzpolster 4 sowie einem beide Bauteile überspannenden Formkörper 1. Die Besonderheit bei dieser Ausführungsform ist, dass der Formkörper 1 transparent ausgebildet ist, also aus einem Schaum bildenden Werkstoff gebildet ist, der es erlaubt, das optische Erscheinungsbild des unter dem Formkörper 1 angeordneten und farbig ausgebildeten Sitzpolsters 4 zu erkennen.

Diese als Designelement wirkende Ausführungsform besitzt darüber hinaus den Vorteil, dass mit dem so ausgebildeten Formkörper 1 auch eine an der Rückseite 8 der Motorradsitzanordnung 23 in einer Ausnehmung 71 angeordnete und in das Sitzpolster 4 integrierte Beleuchtungseinrichtung 63 vom Formkörper 1 überdeckt wird und so beispielsweise gegen das Eindringen von Feuchtigkeit in die Beleuchtungseinrichtung 63 geschützt ist. Auch besitzt diese Ausführungsform den Vorteil, dass bei der Verwendung von Leuchtdioden für die Beleuchtungseinrichtung 63 durch den translucent ausgebildeten Formkörper 1 eine Streuwirkung entsteht, sodass die Leuchtdioden nicht als einzelne Leuchtpunkte optisch wahrgenommen werden, sondern über die Streuwirkung eine Diffusionswirkung entsteht und somit das Rücklicht beziehungsweise die Beleuchtungseinrichtung 63 so wahrgenommen wird, dass sie über den gesamten rückwärtigen Bereich Licht abstrahlt.

Fig. 22 der Zeichnung zeigt ein Motorrad 61 mit einem Vorderrad 64 und einem Hinterrad 65 sowie einem Antriebsmotor 66. Das Motorrad 61 weist darüber hinaus auch eine Sitzfläche 67 auf, welche bei der dargestellten Ausführungsform sowohl für einen Fahrer als auch für einen Beifahrer ausgestaltet ist und bei der die Sitzfläche für den Beifahrer als Motorradsitzanordnung 23 ausgebildet ist.

Die Sitzfläche 67 kann von dem Motorradrahmen 60 abgenommen werden und gegen eine einstückige Motorradsitzanordnung 68 ersetzt werden, die in der Fig. 22 lediglich schematisch dargestellt ist und dann als Motorradsitzanordnung 68 sowohl für den Fahrer als auch für den Beifahrer ausgebildet ist und genauso aufgebaut und ausgebildet ist, wie die vorstehend ausführlich erläuterte Motorradsitzanordnung 23, also eine Tragstruktur 22 aufweist, an der ein Sitzpolster 4 angeordnet ist, welches von einem Sitzpolsterbezug überspannt wird, und der Sitzpolsterbezug in der Form eines Formkörpers 1 ausgebildet ist, der elastisch ausgebildet ist und eine dreidimensionale Ausbildung aufweist.

Die erfindungsgemäße Motorradsitzanordnung besitzt den Vorteil, dass der als Sitzpolsterbezug dienende Formkörper ohne zusätzliche Haltemittel oder Befestigungsmittel an der Tragstruktur festgelegt werden kann und eine exakte und reproduzierbare Positionierbarkeit liefert. Die Oberfläche und die Struktur des Formkörpers bietet dabei hohe Designfreiheitsgrade, da über die Auswahl des zur Ausbildung des Formkörpers verwendeten Materials nicht nur die Härte des Formkörpers und damit der Motorradsitzanordnung beeinflusst werden kann, sondern auch das farbliche Erscheinungsbild und der von der Sitzfläche für den Benutzer bereitgestellte Sitzkomfort und die Haltekraft, also der Grip, den die Sitzfläche dem Benutzer bietet. Es ist also auch die Textur der Sitzfläche und damit der Motorradsitzanordnung beeinflussbar.

Die Motorradsitzanordnung bietet durch die Ausgestaltung des Sitzpolsterbezugs in der Form eines dreidimensionalen elastischen Formkörpers den Vorteil, dass scharfe Kanten und Negativgeometrien sehr gut dargestellt werden können und dass darüber hinaus der Formkörper und damit die Sitzfläche ohne Spannung an der Tragstruktur montiert werden kann.

Auf diese Weise kann eine Motorradsitzanordnung bereitgestellt werden, die einerseits für den Komfort liebenden Tourenfahrer geeignet ist, andererseits auch eine Motorradsitzanordnung für den sportlich ambitionierten Fahrer, genauso wie eine Motorradsitzanordnung für Motorräder, die im Gelände eingesetzt werden, also Offroad Motorräder.

Über die entsprechende Ausbildung des Sitzpolsters und des Formkörpers beziehungsweise auch über die entsprechende Ausbildung des Formkörpers allein mit einem lokal nachgiebigen Material kann beispielsweise auch eine Dammentlastung für einen männlichen Benutzer der Motorradsitzanordnung erzielt werden.

Die Motorradsitzanordnung kann ohne den Einsatz von Werkzeugen montiert werden, da mit der Montage des Formkörpers an der Tragstruktur gleichzeitig auch das Sitzpolster an der Tragstruktur angeordnet ist und genauso schnell können die von der Motorradsitzanordnung nach der Erfindung bereitgestellten Sitzeigenschaften verändert werden, indem ein Formkörper mit einem Sitzpolster mit anderen Shorehärtegraden montiert wird und hierzu ein Formkörper einfach zusammen mit dem Sitzpolster von der Tragstruktur ohne Werkzeugeinsatz abgenommen wird und ein Formkörper mit einem Sitzpolster mit einem anderen Härtegrad ohne Werkzeugeinsatz an der Tragstruktur wieder montiert wird.

Die Motorradsitzanordnung lässt sich daher auch einfach und ohne Werkzeug an die jeweiligen Wünsche des jeweiligen Benutzers anpassen.

Hinsichtlich vorstehend im einzelnen nicht näher erläuterter Merkmale der Erfindung wird im Übrigen ausdrücklich auf die Patentansprüche und die Zeichnung verwiesen.
- 1.: Formkörper
- 2.: Sitzfläche
- 3.: Oberseite
- 4.: Sitzpolster
- 5.: Längsmittelachse
- 6.: Längsmittelebene
- 7.: Vorderseite
- 8.: Rückseite
- 9.: Stirnkante
- 10.: Schnittlinie
- 11.: Obere Fläche
- 12.: Untere Fläche
- 13.: schräge Fläche
- 14.: Schnittlinie
- 15.: Seitenfläche
- 16.: Seitenfläche
- 17.: Aufnahmeraum
- 18.: Abschnitt
- 19.: Abschnitt
- 20.: Abschnitt
- 21.: Abschnitt
- 22.: Tragstruktur
- 23.: Motorradsitzanordnung
- 24.: Randabschnitt
- 25.: Randabschnitt
- 26.: Randabschnitt
- 27.: Randabschnitt
- 28.: Erste Seite, Oberseite
- 29.: Zweite Seite, Unterseite
- 30.: Oberseite
- 31.: Auflage
- 32.: Unterlage
- 33.: Freiraum, Schlitz
- 34.: Vertiefung
- 35.: Profil
- 36.: Halteklammern
- 37.: Außenkontur
- 38.: Abschnitt
- 39.: Ausnehmung, Aussparung
- 40.: Montagefläche
- 41.: Hintere Stirnfläche
- 42.: Kederband
- 43.: Ausnehmung
- 44.: rückspringender Bereich
- 45.: Außenhülle
- 46.: Stift
- 47.: Ausnehmung
- 48.: Verbindungsklammern
- 49.: Ausnehmungen
- 50.: Haltemittel
- 51.: Kopf
- 52.: Haltemittel
- 53.: Ausnehmung
- 54.: Haken
- 55.: Bohrung, Ausnehmung
- 56.: Schraube
- 57.: Haltebauteil
- 58.: Schenkel
- 59.: Querschnittserweiterung
- 60.: Motorradrahmen
- 61.: Motorrad
- 62.: Halterung
- 63.: Beleuchtungseinrichtung
- 64.: Vorderrad
- 65.: Hinterrad
- 66.: Antriebsmotor
- 67.: Sitzfläche
- 68.: Motorradsitzanordnung
- 69.: Sitzpolsterbezug
- 70.: Schenkel
- 71.: Ausnehmung
- 72.: Randbereich
- 73.: Schriftzug

## Patentansprüche

1. Motorradsitzanordnung (23) mit einer Tragstruktur (22) und einem an der Tragstruktur (22) angeordneten Sitzpolster (4) sowie einem das Sitzpolster (4) überspannenden Sitzpolsterbezug (69), wobei die Tragstruktur (22) eine dem Sitzpolster (4) zugewandte erste Seite (28) und eine vom Sitzpolster (4) abgewandte zweite Seite (29) aufweist und die zweite Seite (29) zumindest einen Abschnitt mit einem äußeren Randbereich (24, 25, 26, 27) aufweist und mindestens ein Abschnitt (18, 19, 20, 21) des Sitzpolsterbezugs (69) zumindest einen Teil des Abschnitts (24, 25, 26, 27) des äußeren Randbereichs übergreift, wobei der Sitzpolsterbezug (69) ein elastischer dreidimensionaler Formkörper (1) ist, **dadurch gekennzeichnet, dass** der Formkörper (1) derart ausgebildet ist, dass der von der Tragstruktur (22) und/oder dem Sitzpolster (4) getrennte Formkörper (1) bei einer Anordnung mit einem Bereich, der einen Teil des Abschnitts des äußeren Randbereichs der Tragstruktur (22) übergreift, auf einer ebenen Unterlage (32) aufliegend, seine dreidimensionale Ausbildung zumindest weitgehend beibehält.

2. Motorradsitzanordnung (23) nach Anspruch 1, **dadurch gekennzeichnet, dass** der Formkörper (1) eine dem Sitzpolster (4) zugewandte Unterseite und eine als Sitzfläche (3) dienende Oberseite (28) besitzt und einen das Sitzpolster (4) aufnehmenden Aufnahmeraum (17) aufweist.

3. Motorradsitzanordnung (23) nach Anspruch 1 oder 2, **dadurch gekennzeichnet, dass** der Formkörper (1) in einer Schnittsansicht quer zu einer Längsmittelebene (6) des Formkörpers (1) U-förmig ausgebildet ist und an mindestens einem Endbereich eines Schenkels (70) davon ein sich zumindest weitgehend in Richtung der Längsmittelebene erstreckender Abschnitt (20, 21) vorgesehen ist, der zumindest einen Teil des Abschnitts des äußeren Randbereichs der zweiten Seite (29) der Tragstruktur (22) übergreift.

4. Motorradsitzanordnung (23) nach einem der vorstehenden Ansprüche, **dadurch gekennzeichnet, dass** der Formkörper (1) eine Längsmittelachse (5) aufweist und in Richtung der Längsmittelachse (5) betrachtet eine Vorderseite (7) und eine Rückseite (8) aufweist und an der Vorderseite (7) und/oder der Rückseite(8) mindestens einen sich in Richtung zum aufzunehmenden Sitzpolster hin erstreckenden Abschnitt (18, 19) aufweist, der zumindest einen Teil des Abschnitts des äußeren Randbereichs der zweiten Seite (29) der Tragstruktur (22) übergreift.

5. Motorradsitzanordnung (23) nach einem der vorstehenden Ansprüche, **dadurch gekennzeichnet, dass** der Formkörper (1) den äußeren Randbereich (24, 25, 26, 27) der Tragstruktur (22) übergreift und mittels einer zwischen dem Formkörper (1) und dem Randbereich ausgebildeten Eigenspannung an der Tragstruktur (22) festgelegt ist.

6. Motorradsitzanordnung (23) nach einem der vorstehenden Ansprüche, **dadurch gekennzeichnet, dass** der Formkörper (1) an der anzuordnenden Tragstruktur (22) zugewandten Randbereichen des Formkörpers (1) Abschnitte (18, 19, 20, 21) aufweist, welche mit dem Formkörper (1) einstückig ausgebildet sind und sich von den Randbereichen des Formkörpers (1) aus betrachtet in Richtung nach innen gerichtet erstrecken.

7. Motorradsitzanordnung (23) nach Anspruch 6, **dadurch gekennzeichnet, dass** einander zugeordnete Bereiche der Abschnitte (18, 19, 20, 21) einstückig miteinander verbunden sind oder einander zugeordnete Bereiche der Abschnitte ohne einstückige körperliche Verbindung ausgebildet sind.

8. Motorradsitzanordnung (23) nach einem der vorstehenden Ansprüche, **dadurch gekennzeichnet, dass** ein den äußeren Randbereich (24, 25, 26, 27) der Tragstruktur (22) übergreifender Abschnitt (18, 19, 20, 21) des Formkörpers (1) zumindest entlang eines Bereichs seiner Längserstreckung mindestens eine Vertiefung (34) aufweist, welche eine Tiefe aufweist, die einem Teilbetrag der Wandstärke (H) des Abschnitts (18, 19, 20, 21) entspricht.

9. Motorradsitzanordnung (23) nach einem der vorstehenden Ansprüche, **dadurch gekennzeichnet, dass** der Formkörper (1) im Bereich der als Sitzfläche (3) dienenden Oberseite (28) eine geringere Wandstärke besitzt als an seitlichen, dem Randbereich der Tragstruktur (22) zugeordneten Bereichen.

10. Motorradsitzanordnung (23) nach einem der vorstehenden Ansprüche, **dadurch gekennzeichnet, dass** der Formkörper mittels mindestens eines spritzgießbaren Werkstoffs gebildet ist, insbesondere einem thermoplastischen Urethanwerkstoff, und der Formkörper einen einheitlich gleichen Shorehärtegrad besitzt oder mindestens einen Bereich mit von diesem Shorehärtegrad abweichenden Shorehärtegrad aufweist.

11. Motorradsitzanordnung (23) nach einem der vorstehenden Ansprüche, **dadurch gekennzeichnet, dass** der Formkörper (1) mittels mindestens eines spritzgießbaren Werkstoffs gebildet ist, insbesondere einem thermoplastischen Urethanwerkstoff, und der Formkörper (1) einen einheitlich gleichen Farbgrad besitzt oder mindestens einen Bereich (38) mit von diesem Farbgrad abweichenden Farbgrad aufweist.

12. Motorradsitzanordnung (23) nach einem der vorstehenden Ansprüche, **dadurch gekennzeichnet, dass** ein den äußeren Randbereich der Tragstruktur (22) übergreifender Abschnitt (18, 19, 20, 21) des Formkörpers (1) zumindest entlang eines Bereichs seiner Längserstreckung mittels kraftschlüssiger oder formschlüssiger oder stoffschlüssiger Mittel am Randbereich der Tragstruktur (22) vorzugsweise lösbar festgelegt ist.

13. Motorradsitzanordnung (23) nach einem der vorstehenden Ansprüche, **dadurch gekennzeichnet, dass** ein den äußeren Randbereich der Tragstruktur (22) übergreifender Abschnitt (18, 29, 20, 21) des Formkörpers (1) einstückig mit dem Abschnitt (18, 29, 20, 21) ausgebildete Haltemittel (51) aufweist, welche zur Anordnung in Ausnehmungen (49) des Randbereichs der Tragstruktur (22) ausgebildet sind.

14. Motorradsitzanordnung (23) nach einem der vorstehenden Ansprüche, **dadurch gekennzeichnet, dass** an dem äußeren Randbereich der Tragstruktur (22) Haltemittel (52) angeordnet oder angeformt sind, welche mit Ausnehmungen (53) des den äußeren Randbereich der Tragstruktur übergreifenden Abschnitts (18, 29, 20, 21) des Formkörpers (1) in Eingriff bringbar sind.

15. Motorradsitzanordnung (23) nach einem der vorstehenden Ansprüche, **dadurch gekennzeichnet, dass** ein den äußeren Randbereich der Tragstruktur übergreifender Abschnitt (18, 29, 20, 21) des Formkörpers (1) mit einer einstückig mit dem Abschnitt versehenen Querschnittserweiterung (59) versehen ist, die von einem lösbar mit der Tragstruktur in Eingriff bringbaren Haltemittel (57) gegen den Randbereich beaufschlagbar ist.

16. Motorradsitzanordnung (23) nach einem der vorstehenden Ansprüche, **dadurch gekennzeichnet, dass** an einem rückseitigen Bereich der Motorradsitzanordnung (23) eine Ausnehmung (71) ausgebildet ist, welche zur Aufnahme einer Beleuchtungseinrichtung (63) ausgebildet ist, und dass der elastische dreidimensionale Formkörper (1) zur Überdeckung der Ausnehmung (71) ausgebildet ist und zumindest im Bereich der Ausnehmung (71) translucent ausgebildet ist.

17. Motorrad (61) mit einem Vorderrad (64) sowie einem Hinterrad (65) und einem Antriebsmotor (66) sowie einer Sitzfläche (67), **dadurch gekennzeichnet, dass** die Sitzfläche eine Motorradsitzanordnung nach einem der Ansprüche 1 bis 16 ist.

## Claims

1. Motorcycle seat assembly (23) having a support structure (22) and seat upholstery (4) arranged on the support structure (22), as well as a seat upholstery cover (69) spanning the seat upholstery (4), the support structure (22) having a first side (28) which faces the seat upholstery (4) and a second side (29) which faces away from the seat upholstery (4), and the second side (29) being provided with at least one portion having an outer edge region (24, 25, 26, 27), and at least one portion (18, 19, 20, 21) of the seat upholstery cover (69) overlapping at least one part of the portion (24, 25, 26, 27) of the outer edge region, the seat upholstery cover (69) being a resilient, three-dimensional moulded body (1), **characterized in that** the moulded body (1) is configured such that, in the case of an assembly with a region which overlaps a part of the portion of the outer edge region of the support structure (22), the moulded body (1) which is separated from the support structure (22) and/or the seat upholstery (4) at least largely retains its three-dimensional configuration when lying on a planar base (32).

2. Motorcycle seat assembly (23) according to claim 1, **characterized in that** the moulded body (1) possesses an underside which faces the seat upholstery (4) and an upper side (28) which serves as a seat surface (3) and has a receiving space (17) receiving the seat upholstery (4).

3. Motorcycle seat assembly (23) according to claim 1 or 2, **characterized in that** the moulded body (1) is configured to be U-shaped in a sectional view transversely to a longitudinal central plane (6) of the moulded body (1) and a portion (20, 21) extending at least largely in the direction of the longitudinal central plane is provided in at least one end region of a leg (70) thereof and overlaps at least one part of the portion of the outer edge region of the second side (29) of the support structure (22).

4. Motorcycle seat assembly (23) according to one of the preceding claims, **characterized in that** the moulded body (1) has a longitudinal central axis (5) and, when viewed in the direction of the longitudinal central axis (5), has a front side (7) and a rear side (8) and, on the front side (7) and/or the rear side (8), has at least one portion (18, 19) which extends in the direction of the seat upholstery to be received and overlaps at least one part of the portion of the outer edge region of the second side (29) of the support structure (22).

5. Motorcycle seat assembly (23) according to one of the preceding claims, **characterized in that** the moulded body (1) overlaps the outer edge region (24, 25, 26, 27) of the support structure (22) and is attached to the support structure (22) by means of an internal stress formed between the moulded body (1) and the edge region.

6. Motorcycle seat assembly (23) according to one of the preceding claims, **characterized in that**, at edge regions of the moulded body (1) which face the support structure (22) to be arranged, the moulded body (1) has portions (18, 19, 20, 21) which are configured integrally with the moulded body (1) and extend pointing in an inward direction when viewed from the edge regions of the moulded body (1).

7. Motorcycle seat assembly (23) according to claim 6, **characterized in that** mutually associated regions of the portions (18, 19, 20, 21) are integrally connected to one another or mutually associated regions of the portions are configured without any integral physical connection.

8. Motorcycle seat assembly (23) according to one of the preceding claims, **characterized in that** a portion (18, 19, 20, 21) of the moulded body (1) which overlaps the outer edge region (24, 25, 26, 27) of the support structure (22) has, at least along one region of its longitudinal extent, at least one recess (34) which has a depth that corresponds to a partial amount of the wall thickness (H) of the portion (18, 19, 20, 21).

9. Motorcycle seat assembly (23) according to one of the preceding claims, **characterized in that**, in the region of the upper side (28) which serves as a seat surface (3), the moulded body (1) possesses a smaller wall thickness than in lateral regions which are associated with the edge region of the support structure (22).

10. Motorcycle seat assembly (23) according to one of the preceding claims, **characterized in that** the moulded body is formed of at least one injection-mouldable material, in particular a thermoplastic urethane material, and the moulded body possesses a uniform degree of Shore hardness or has at least one region with a degree of Shore hardness which differs from this degree of Shore hardness.

11. Motorcycle seat assembly (23) according to one of the preceding claims, **characterized in that** the moulded body (1) is formed of at least one injection-mouldable material, in particular a thermoplastic urethane material, and the moulded body (1) possesses a uniform colour grade or has at least one region (38) with a colour grade which differs from this colour grade.

12. Motorcycle seat assembly (23) according to one of the preceding claims, **characterized in that** a portion (18, 19, 20, 21) of the moulded body (1) which overlaps the outer edge region of the support structure (22) is preferably releasably attached, at least along one region of its longitudinal extent, by non-positive or positive or substance-locking means, to the edge region of the support structure (22).

13. Motorcycle seat assembly (23) according to one of the preceding claims, **characterized in that** a portion (18, 29, 20, 21) of the moulded body (1) which overlaps the outer edge region of the support structure (22) has retaining means (51) which are configured integrally with the portion (18, 29, 20, 21) and are configured to be arranged in recesses (49) in the edge region of the support structure (22).

14. Motorcycle seat assembly (23) according to one of the preceding claims, **characterized in that** retaining means (52) are arranged or moulded on the outer edge region of the support structure (22) and are to be brought into engagement with recesses (53) in the portion (18, 29, 20, 21) of the moulded body (1) which overlaps the outer edge region of the support structure.

15. Motorcycle seat assembly (23) according to one of the preceding claims, **characterized in that** a portion (18, 29, 20, 21) of the moulded body (1) which overlaps the outer edge region of the support structure is provided with a cross-sectional enlargement (59) which is provided integrally with the portion and is to be acted upon against the edge region by a retaining means (57) which is to be brought into releasable engagement with the support structure.

16. Motorcycle seat assembly (23) according to one of the preceding claims, **characterized in that**, in a rear region of the motorcycle seat assembly (23), a recess (71) is configured which is configured to receive an illumination device (63), and **in that** the resilient, three-dimensional moulded body (1) is configured to cover the recess (71) and is configured to be translucent at least in the region of the recess (71).

17. Motorcycle (61) having a front wheel (64) and a rear wheel (65) and a drive motor (66) and a seat surface (67), **characterized in that** the seat surface is a motorcycle seat assembly according to one of claims 1 to 16.

## Revendications

1. Ensemble siège de moto (23) comprenant une structure de support (22) et un rembourrage de siège (4) agencé sur la structure de support (22) ainsi qu'un revêtement de rembourrage de siège (69) couvrant le rembourrage de siège (4), la structure de support (22) ayant une première face (28) tournée vers le rembourrage de siège (4) et une deuxième face (29) détournée du rembourrage de siège (4), la deuxième face (29) présentant au moins une portion dotée d'une région de bord extérieur (24, 25, 26, 27), et au moins une portion (18, 19, 20, 21) du revêtement de rembourrage de siège (69) chevauchant au moins une partie de la portion (24, 25, 26, 27) de la région de bord extérieur, le revêtement de rembourrage de siège (69) consistant en une pièce moulée élastique tridimensionnelle (1) ; **caractérisé en ce que** la pièce moulée (1) est conçue de telle façon que, séparée de la structure de support (22) et/ou du rembourrage de siège (4), dans le cas d'un agencement avec une région chevauchant une partie de la portion de la région de bord extérieur de la structure de support (22), ladite pièce moulée (1) reposant sur une surface plane (32) conserve au moins en grande partie sa configuration tridimensionnelle.

2. Ensemble siège de moto (23) selon la revendication 1, **caractérisé en ce que** la pièce moulée (1) possède une face inférieure tournée vers le rembourrage de siège (4) et une face supérieure (28) servant de surface d'assise (3), et présente un espace de réception (17) recevant le rembourrage de siège (4).

3. Ensemble siège de moto (23) selon la revendication 1 ou 2, **caractérisé en ce que** la pièce moulée (1) est en forme de U, vue en coupe transversalement à un plan médian longitudinal (6) de la pièce moulée (1), et **en ce qu'**il est prévu, au niveau d'au moins une région terminale d'une branche (70) de celle-ci, une portion (20, 21) qui s'étend au moins en grande partie dans la direction du plan central longitudinal et qui chevauche au moins une partie de la portion de la région de bord extérieur de la deuxième face (29) de la structure de support (22).

4. Ensemble siège de moto (23) selon l'une des revendications précédentes, **caractérisé en ce que** la pièce moulée (1) présente un axe central longitudinal (5) et, vue dans la direction de l'axe central longitudinal (5), présente un côté avant (7) et un côté arrière (8) et, au niveau du côté avant (7) et/ou du côté arrière (8), présente au moins une portion (18, 19) qui s'étend en direction du rembourrage de siège destiné à y être reçu et qui chevauche au moins une partie de la portion de la région de bord extérieur de la deuxième face (29) de la structure de support (22).

5. Ensemble siège de moto (23) selon l'une des revendications précédentes, **caractérisé en ce que** la pièce moulée (1) chevauche la région de bord extérieur (24, 25, 26, 27) de la structure de support (22) et est fixée sur la structure de support (22) sous l'effet de la contrainte résiduelle constituée entre la pièce moulée (1) et la région de bord.

6. Ensemble siège de moto (23) selon l'une des revendications précédentes, **caractérisé en ce que** la pièce moulée (1) présente des portions (18, 19, 20, 21) sur des régions de bord de la pièce moulée (1) tournées vers la structure de support (22) à agencer, lesquelles portions sont conçues d'un seul tenant avec la pièce moulée (1) et s'étendent vers l'intérieur, vues depuis les régions de bord de la pièce moulée (1).

7. Ensemble siège de moto (23) selon la revendication 6, **caractérisé en ce que** des régions mutuellement associées des portions (18, 19, 20, 21) sont reliées les unes aux autres d'un seul tenant ou des régions mutuellement associées desdites portions sont conçues sans liaison physique constituée d'un seul tenant.

8. Ensemble siège de moto (23) selon l'une des revendications précédentes, **caractérisé en ce qu'**une portion (18, 19, 20, 21) de la pièce moulée (1) qui chevauche la région de bord extérieur (24, 25, 26, 27) de la structure de support (22) présente, au moins le long d'une région de son étendue longitudinale, au moins un renfoncement (34) dont la profondeur correspond à une fraction de l'épaisseur de paroi (H) de la portion (18, 19, 20, 21).

9. Ensemble siège de moto (23) selon l'une des revendications précédentes, **caractérisé en ce que** la pièce moulée (1) présente une moindre épaisseur de paroi dans la région de la face supérieure (28) servant de surface d'assise (3) que dans des régions latérales associées à la région de bord de la structure de support (22).

10. Ensemble siège de moto (23) selon l'une des revendications précédentes, **caractérisé en ce que** la pièce moulée est formée au moyen d'au moins un matériau susceptible d'être moulé par injection, notamment un matériau thermoplastique à base d'uréthane, et la pièce moulée possède un degré de dureté Shore uniformément identique ou bien présente au moins une région dont le degré de dureté Shore diffère de ce degré de dureté Shore.

11. Ensemble siège de moto (23) selon l'une des revendications précédentes, **caractérisé en ce que** la pièce moulée (1) est formée au moyen d'au moins un matériau susceptible d'être moulé par injection, notamment un matériau thermoplastique à base d'uréthane, et la pièce moulée (1) présente un niveau de coloration uniformément identique ou bien présente au moins une région (38) dont le niveau de coloration diffère de ce niveau de coloration.

12. Ensemble siège de moto (23) selon l'une des revendications précédentes, **caractérisé en ce qu'**une portion (18, 19, 20, 21) de la pièce moulée (1) qui chevauche la région de bord extérieur de la structure de support (22) est fixée, au moins le long d'une région de son étendue longitudinale, par complémentarité de forme, à force ou par des moyens adhésifs sur la région de bord de la structure de support (22), de préférence de manière amovible.

13. Ensemble siège de moto (23) selon l'une des revendications précédentes, **caractérisé en ce qu'**une portion (18, 29, 20, 21) de la pièce moulée (1) qui chevauche la région de bord extérieur de la structure de support (22) présente des moyens de retenue (51) conçus d'un seul tenant avec ladite portion (18, 29, 20, 21) et conçus pour être agencés dans des évidements (49) de la région de bord de la structure de support (22).

14. Ensemble siège de moto (23) selon l'une des revendications précédentes, **caractérisé en ce que** des moyens de retenue (52) sont agencés ou constitués sur la région de bord extérieur de la structure de support (22) et peuvent s'accrocher dans des évidements (53) de la portion (18, 29, 20, 21) de la pièce moulée (1) qui chevauche ladite région de bord extérieur de la structure de support.

15. Ensemble siège de moto (23) selon l'une des revendications précédentes, **caractérisé en ce qu'**une portion (18, 29, 20, 21) de la pièce moulée (1) qui chevauche la région de bord extérieur de la structure de support est pourvue d'un renflement de section transversale (59) formé d'un seul tenant avec ladite portion et qui peut être forcé contre la région de bord sous l'effet d'un moyen de retenue (57) susceptible de venir s'accrocher de manière amovible sur la structure de support.

16. Ensemble siège de moto (23) selon l'une des revendications précédentes, **caractérisé en ce qu'**un évidement (71) est conçu sur une région arrière de l'ensemble siège de moto (23) pour recevoir un dispositif d'éclairage (63) et **en ce que** la pièce moulée (1) élastique tridimensionnelle est conçue pour recouvrir l'évidement (71) et est conçue translucide au moins dans la région dudit évidement (71).

17. Motocycle (61) comportant une roue avant (64) et une roue arrière (65) ainsi qu'un moteur de propulsion (66) et une surface d'assise (67), **caractérisé en ce que** la surface d'assise est un ensemble siège de moto selon l'une des revendications 1 à 16.
